# EUROPÄISCHE PATENTSCHRIFT

(11) **EP 4 192 314 B1**
(45) Veröffentlichungstag und Bekanntmachung des Hinweises auf die Patenterteilung: **08.07.2026**
(21) Anmeldenummer: 21754991.4
(22) Anmeldetag: 05.08.2021
(51) Int. Cl.: A47K 3/40, E03C 1/04, E03C 1/05, G01G 19/44, A47K 3/16

(54) **DUSCHE MIT REVISIONS-BODENPLATTE**
SHOWER HAVING REVISION BASE PLATE
DOUCHE PRÉSENTANT UNE PLAQUE DE BASE DE RÉVISION

(30) Priorität: 06.08.2020 DE 202020104552 U; 18.09.2020 DE 202020105379 U
(43) Veröffentlichungstag der Anmeldung: 14.06.2023
(73) Patentinhaber: Beßler, Jürgen, 48149 Münster (DE)
(72) Erfinder: Beßler, Jürgen, 48149 Münster (DE)
(74) Vertreter: Gottschald Patentanwälte Partnerschaft mbB
(86) Internationale Anmeldenummer: PCT/EP2021/071935
(87) Internationale Veröffentlichungsnummer: WO 2022/029264

(56) Entgegenhaltungen:
- EP-A1- 3 251 572
- WO-A1-2016/181207
- DE-A1- 102011 119 697
- DE-U1- 202007 007 907
- ES-U- 1 073 946
- KR-A- 20090 046 252
- US-A1- 2019 191 933

## Beschreibung

Die Erfindung betrifft eine Dusche nach dem Oberbegriff des Anspruchs 1.

Aus der EP 3 251 572 A1, die den am nächsten kommenden Stand der Technik darstellt, ist eine solche Dusche bekannt. Eine solche Dusche ist auch aus der US 2019 0 191 933 A1 bekannt. In an sich bekannter Weise ist eine Wanne vorgesehen, die in der Praxis als Duschtasse oder Duschwanne bezeichnet wird. In an sich bekannter Weise weist die Duschwanne einen im Wesentlichen U-förmigen Querschnitt auf, mit einem Boden und einem umlaufenden Rand, der sich vom Boden nach oben erstreckt. Die Dusche der US 2019 0 191 933 A1 weist zusätzlich oberhalb des Bodens eine begehbare Bodenfläche auf, wobei im Rahmen des vorliegenden Vorschlags als "Bodenfläche" das Element der Dusche bezeichnet wird, das dazu bestimmt ist, dass eine duschende Person diese begehbare Bodenfläche betritt.

Die Bodenfläche dieser bekannten Dusche liegt in derselben Ebene wie die Oberfläche eines Umfangsrahmens, so dass die Bodenfläche in den Umfangsrahmen eintaucht. Flüssigkeiten treffen beim Duschen auf die Bodenfläche auf, die als flache, ebene Platte ausgestaltet ist. Die Bodenfläche ist von einem Ringspalt umgeben, der zwischen der Bodenfläche und dem Umfangsrahmen verläuft. Flüssigkeit, die auf die begehbare Bodenfläche aufgetroffen und nach außen zur Seite und dann in den Ringspalt geströmt ist, gelangt durch den Ringspalt in die Duschwanne und in eine Abflussöffnung, die im Boden der Duschwanne angeordnet ist.

Im Unterschied zu herkömmlichen Duschen, bei denen die Duschtasse oder Duschwanne als Mulde sichtbar ist, bewirkt bei dieser bekannten Dusche der US 2019 0 191 933 A1 die Bodenfläche, die in derselben Ebene wie der Umfangsrahmen verläuft, den optischen Eindruck eines fast - nämlich bis auf den Ringspalt - geschlossenen begehbaren und ebenen Bodens der Dusche. Dies ist ästhetisch vorteilhaft und ermöglicht auch einen niveaugleichen Übergang vom Bodenbelag eines Raumes, z. B. eines Badezimmers, in die Dusche und somit einen barrierefreien Zugang in die Dusche.

Aus der DE 10 2017 101 971 A1 ist eine Dusche bekannt, die keine Duschwanne aufweist, sondern bei welcher die begehbare Bodenfläche in Form einer einzigen Bodenplatte oder einer Vielzahl kleinerer Bodenplatten ausgestaltet ist, die direkt auf dem Boden des Raumes angeordnet sind, in dem sich die Dusche befindet. Beispielsweise kann auf einer Rohbetondecke ein Estrich angeordnet sein, der den Unterbauboden für die Dusche bildet, wobei die eine große oder die mehreren kleinen Bodenplatten der Dusche in einem Kleberbett verklebt sind, das sich auf dem Estrich befindet. In der Bodenplatte der Dusche ist eine Ablauföffnung angeordnet, die nach oben hin durch einen Deckel abgedeckt ist, der somit einen Teil der begehbaren Bodenfläche bildet und je nach Ausgestaltung niveaugleich mit der Bodenplatte einen geschlossen wirkenden, begehbaren und ebenen Boden der Dusche schaffen kann Der Deckel ist lösbar mit einem Siphon-Ablaufkörper bzw. mit der Bodenplatte verbunden, um einen Zugang zu Bereichen und Bauteilen im Siphon-Ablaufkörper zu ermöglichen, die unterhalb des Deckels angeordnet sind. Das Duschwasser gelangt in die Ablauföffnung durch eine längliche, schlitzartige Rille, die an die Bodenplatte anschließt und als Sammelrinne für das abschließende Duschwasser dient. An diese Rille schließt dort ein als "Rillenablauf" bezeichneter Kanal an, wo die Rille der Ablauföffnung am nächsten benachbart ist, so dass das Duschwasser aus der Rille durch den Rillenablauf in die Ablauföffnung fließen kann.

Aus der Website https://www.easydrain.de/serie/dot-square ist ebenfalls eine Dusche bekannt, bei der das Wasser auf eine Bodenfläche auftrifft, die als flache, ebene Platte ausgestaltet und von einem Ringspalt umgeben ist. Zum Abführen von Flüssigkeiten ist unterhalb dieser als Duschablauf bezeichneten Anordnung eine Abflussöffnung vorgesehen. Bei dieser bekannten Dusche ist vorgesehen, dass die Bodenfläche in Form des Deckels über der Abflussöffnung als separates, loses Bauteil angehoben und so von der übrigen Dusche getrennt werden kann. Die Bodenfläche ist in unterschiedlichen Dekorvarianten erhältlich, indem ein so genannter Rost mit unterschiedlichen Belägen versehen werden kann wie z. B. Holz, glattes oder rutschhemmendes Metall, Fliesen oder dergleichen. Im Unterschied zu der genannten DE 10 2017 101 971 A1 ist der runde oder quadratische Deckel dieses Duschablaufs erheblich größer und erstreckt sich über mehr als die halbe Breite des gesamten Bodens der Dusche.

Da die Benutzer auf der Bodenfläche der Dusche stehen, wird diese Bodenfläche mit dem vollen Körpergewicht der jeweiligen Benutzer belastet. Eine dementsprechend stabile Ausgestaltung der Bodenfläche ist daher umso erforderlicher, je größer die Bodenfläche ist, z. B. je größer der Anteil der Bodenfläche an dem gesamten Boden der Dusche ist. Eine stabile Ausgestaltung der Bodenfläche kann durch zusätzliche Aussteifungselemente oder durch die Materialstärke der Bodenfläche selbst erreicht werden, führt jedoch zu einem hohen Gewicht der Bodenfläche, was angesichts der Abmessungen von etwa 50 bis 70 cm Größe die Handhabung einer solchen Bodenfläche erschwert. Daher stellt der gewünschte Austausch der Bodenfläche eine vergleichsweise aufwändige Maßnahme dar. Dementsprechend kommt die Herausnahme der Bodenfläche einer Dusche nicht für die Benutzer der Dusche selbst, sondern nur unter Einsatz von externen Spezialkräften wie z.B. Handwerkern infrage, wenn die anhebbare Bodenfläche nicht nur einen kleinen Deckel über der Abflussöffnung, sondern einen großen Anteil an dem gesamten Boden der Dusche oder sogar den gesamten Boden ausmacht.

Aus der KR 2009 0046252 A ist eine Dusche bekannt, die eine sensorische Erfassung einer Person in der Dusche und eine daraus resultierende Steuerung des Wasserstroms aus den Duschdüsen erlaubt.

Der Erfindung liegt die Aufgabe zugrunde, eine gattungsgemäße Dusche weiter zu verbessern.

Diese Aufgabe wird durch eine Dusche mit den Merkmalen des kennzeichnenden Teils des Anspruchs 1 gelöst. Vorteilhafte Ausgestaltungen sind in den Unteransprüchen beschrieben.

Bei der erfindungsgemäßen Dusche ist vorgesehen, unterhalb der Bodenfläche einen Einbauraum anzuordnen, der vor dem Eindringen von Duschwasser geschützt ist und dazu bestimmt ist, technische Einrichtungen aufzunehmen. Den Einbauraum vor dem Eindringen von Duschwasser zu schützen, indem der Einbauraum vom Duschwasser getrennt ist, kann durch verschiedene technische Maßnahmen erreicht werden: wenn wie bei der eingangs genannten US 2019 0 191 933 A1 ein Ringspalt rings um die begehbare Bodenfläche verläuft, in den das Duschwasser fließt, so kann dieser Ringspalt an einen ringförmig umlaufenden Kanal anschließen, der das Duschwasser zu einer Abflussöffnung führt. Innerhalb dieses ringförmig umlaufenden Kanals, und somit für das Duschwasser nicht zugänglich, steht dann ein Einbauraum bereit, in dem technische Einrichtungen wassergeschützt angeordnet werden können. Wenn jedoch wie bei der oben genannten DE 10 2017 101 971 A1 eine Ablaufrinne nur an einer Seite an die begehbare Bodenfläche anschließt und nahe dieser Ablaufrinne die Abflussöffnung angeordnet ist, kann an nahezu beliebigen Stellen unterhalb der Bodenfläche, oder auch praktisch vollflächig, bis auf die Abflussöffnung, der Einbauraum für zusätzliche technische Einrichtungen bereitgestellt werden.

Der Abfluss einer Dusche, der zum Abführen des verbrauchten Duschwassers dient und auch als Abflusseinrichtung oder Ablaufeinrichtung bezeichnet wird, einschließlich seiner Abflussöffnung und eines ggf. darin angeordneten Siebs, wird im Rahmen des vorliegenden Vorschlags nicht als eine "technische Einrichtung" bezeichnet, so dass die technischen Einrichtungen stets zusätzlich zu einem Abfluss der Dusche vorgesehen sind und der vorgesehene Einbauraum zur Aufnahme dieser technischen Einrichtungen genutzt werden kann, die problemlos zugänglich sind, wenn die Bodenfläche in ihre Wartungsstellung gebracht worden und somit ein Zugang zu dem Einbauraum geschaffen worden ist.

Weiterhin ist vorgesehen, dass die Bodenfläche beweglich ist und oberhalb des Einbauraums in der Art gehalten ist, dass sie in eine Wartungsstellung gebracht werden können, in welcher sie einen Zugang zu dem Einbauraum und den darin befindlichen technischen Einrichtungen ermöglicht. Auch dies kann auf unterschiedlichen technischen Wegen erreicht werden: beispielsweise kann die Bodenfläche als lose handhabbares Element ausgestaltet sein, welches aus seiner liegenden Gebrauchsstellung angehoben und in Entfernung von der Dusche abgesetzt werden kann. Die entsprechenden Hebeeinrichtungen sind beispielsweise als "Glasheber" oder "Vakuumgreifer" aus der Praxis bekannt und handelsüblich. Wenn die Bodenfläche als loses Bauteil trennbar von der Ablaufeinrichtung ausgestaltet ist, kann eine optimal freie Zugänglichkeit zu dem Einbauraum ermöglicht werden.

Für den Fall, dass die Bodenfläche ein Eigengewicht aufweist, welches für eine manuelle Handhabung hinderlich ist, können die folgenden Möglichkeiten zur beweglichen Ausgestaltung der Bodenfläche vorteilhaft sein: in einer Ausgestaltung kann die Bodenfläche höhenbeweglich gelagert sein, beispielsweise mittels eines Teleskop- oder Scherengestänges, so dass die Bodenfläche zwischen einer flach liegenden Gebrauchsstellung und einer ebenfalls flach liegenden angehobenen Wartungsstellung beweglich ist.

In einer anderen Ausgestaltung kann die Bodenfläche schwenkbeweglich gelagert sein, so dass sie zwischen einer flach liegenden Gebrauchsstellung und einer schräg oder aufrecht stehenden Wartungsstellung beweglich ist.

Über eine an sich bekannte Ratschenfunktion, oder durch eine Bohrung - bzw. eine Lochreihe aus mehreren Bohrungen - und einen darin einsteckbaren Sicherungsstift, oder durch einen anderen, ebenfalls an sich bekannten Mechanismus kann sichergestellt werden, dass beim Anheben die Bodenfläche in ihrer endgültig erreichten Wartungsstellung sicher gehalten wird, und gegebenenfalls auch in mehreren Hebe- oder Schwenkstufen zwischen der Gebrauchs- und der Wartungsstellung.

Insbesondere kann vorteilhaft vorgesehen sein, dass das Anheben der Bodenfläche kraftunterstützt erfolgt, beispielsweise mithilfe von Elektromotoren, Gasdruckfedern oder ähnlichen, an sich bekannten Antriebsmitteln oder Kraftspeichern. Im Falle eines Antriebsmotors kann vorteilhaft ein Getriebemotor vorgesehen sein, wobei das Getriebe eine selbstsperrende Wirkung aufweist, die anstelle der oben erwähnten Ratschenfunktion gewährleistet, dass die Bodenplatte in ihren unterschiedlichen Stellungen gesichert ist und diese Stellungen automatisch beibehält, sofern nicht der Antriebsmotor betätigt wird.

Dabei erfolgt diese Bewegung vorschlagsgemäß kraftunterstützt, beispielsweise mittels eines elektrischen Antriebs oder mittels eines Kraftspeichers wie z.B. einer Feder. Durch die Kraftunterstützung wird einerseits das Anheben der Bodenfläche in ihre Wartungsstellung erleichtert. Andererseits wird aber auch bewirkt, dass die Bodenfläche beim Absenken in ihre Gebrauchsstellung nicht beschädigt wird, weil sie nicht im freien Fall und mit ihrem gesamten Eigengewicht ungebremst in die liegende Gebrauchsstellung fällt. Vielmehr wird beispielsweise durch den erwähnten elektrischen Antrieb eine kontrollierte Abwärtsbewegung sichergestellt, insbesondere wenn beispielsweise ein Getriebemotor mit einem selbsthemmenden Schneckengetriebe verwendet wird. Wenn ein Kraftspeicher wie eine Feder verwendet wird, so wird dieser Kraftspeicher beim Absenken der Bodenfläche gespannt, wodurch ebenfalls der ansonsten freie Fall der Bodenfläche gebremst wird. Insbesondere kann diese Bewegung gedämpft erfolgen, beispielsweise durch einen Gasdruckdämpfer.

Durch die vorschlagsgemäße Ausgestaltung der Dusche werden mehrere Vorteile erreicht:
Erstens ist die Dusche benutzerfreundlich im täglichen Gebrauch, denn es kann eine Wartung bzw. Reinigung der Ablaufeinrichtung erfolgen. Dies ist in der Regel nicht erforderlich, wenn die einzelnen Abschnitte der Ablaufeinrichtung einen stetig größer werdenden freien Querschnitt aufweisen, beispielsweise die Abflussöffnung einen größeren Querschnitt aufweist als eine ihr vorgeschaltete Ablaufrinne, und eine Abflussleitung einen größeren Querschnitt aufweist als die ihr vorgeschaltete Abflussöffnung. In den Ablauf gelangte Gegenstände können daher nicht hängen bleiben und den Ablauf verstopfen. Wenn jedoch Ablagerungen entfernt werden sollen, die sich während einer längeren Nutzungsdauer gebildet haben könnten, oder wenn versehentlich Gegenstände in die Ablaufeinrichtungen gefallen sind, die zurückgewonnen werden sollen und die Ablaufeinrichtung zu diesem Zweck beispielsweise ein Sieb oder eine ähnliche Rückhalteeinrichtung aufweist, kann ein problemloser Zugang zu der Ablaufeinrichtung ermöglicht werden, wenn die Bodenfläche der Dusche in ihre Wartungsstellung bewegt werden kann und die Ablaufeinrichtung dementsprechend freiliegt und gut zugänglich ist.

Dies gilt insbesondere dann, wenn die Bodenfläche der Dusche als geschlossene Fläche ausgestaltet ist und ein Wasserablauf in Form einer umlaufenden Rinne ausgestaltet ist, an welche die Abflussöffnung anschließt. Die Bodenfläche kann sich beispielsweise teilweise über die Ablaufrinne erstrecken, so dass die Ablaufrinne ästhetisch vorteilhaft optisch möglichst unauffällig ist. Außerdem wird in diesem Fall aufgrund der schmalen, fugenähnlichen Öffnung erreicht, dass versehentlich herabfallende Gegenstände wie z.B. Duschmittel-Verschlussdeckel zurückgehalten werden und nicht in die Ablaufrinne und weiter in die Abflussöffnung gelangen können. Wenn vor der Abflussöffnung ein Sieb angeordnet ist, um in die Ablaufrinne gelangte Gegenstände zurückzuhalten, kann der Zugang zu diesem Sieb trotz des schmalen sichtbaren Spalts über der Ablaufrinne problemlos ermöglicht werden, wenn die Bodenfläche in ihre Wartungsstellung bewegt worden ist.

Wenn die Bodenfläche jedoch nicht als geschlossene Fläche ausgestaltet ist, sondern in der Bodenfläche die Abflussöffnung angeordnet ist, kann ein flexibler Schlauch von der Abflussöffnung bis zu einer Abflussleitung verlaufen, die unterhalb der Bodenfläche ortsfest installiert ist. Der flexible Schlauch ermöglicht die Bewegungen der Bodenfläche, ohne die Bodenfläche von der Abflussleitung entkoppeln zu müssen. Zwischen dem flexiblen Schlauch und der starr montierten Abflussleitung kann eine Filterkammer unterhalb der Bodenfläche untergebracht werden, die zugänglich ist und geöffnet werden kann, wenn sich die Bodenklappe in ihrer Wartungsstellung befindet, so dass dann die in der Filterkammer zurückgehaltenen Gegenstände aus der Filterkammer entnommen werden können.

Zweitens erleichtert die Dusche im Fall von Störungen Reparaturen, falls Undichtigkeiten im Ablauf der Dusche auftreten sollten, beispielsweise im Übergang von einer Abflussöffnung der Dusche zu einer weiterführenden Abflussleitung. Während aus Abmessungs- und Gewichtsgründen zur Handhabung einer flachen Bodenfläche oder auch einer wannenförmigen sogenannten Duschtasse typischerweise zwei Monteure erforderlich sind, kann bei einer vorschlagsgemäßen Ausgestaltung der Dusche die Bodenfläche weniger Material als die Duschtasse enthalten und somit ein geringeres Gewicht aufweisen, so dass sie gegebenenfalls von einer einzigen Person aus ihrer Gebrauchsstellung in ihre Wartungsstellung bewegt werden kann und Reparaturarbeiten im Falle von festgestellten Undichtigkeiten auch von einem einzigen Handwerker durchgeführt werden können.

Drittens erleichtert die vorschlagsgemäße Ausgestaltung der Dusche eine funktionale Aufwertung der Dusche, denn der Raum, der sich unterhalb der Bodenfläche befindet, kann als Einbauraum für technische Einrichtungen genutzt werden. Im Vergleich dazu, technische Elemente hinter einer Wandverkleidung der Dusche wie Natursteinplatten, Fliesen oder dergleichen anzuordnen, wird eine Revision dieser technischen Einrichtungen erheblich erleichtert, wenn diese Einrichtungen problemlos zugänglich sind. Dies ist möglich, wenn sich die Bodenfläche der Dusche in ihrer Wartungsstellung befindet. Insbesondere ist es nicht erforderlich, Teile der Wandverkleidung abzunehmen und dazu entweder diese Teile selbst zu zerstören oder zumindest Fugen zu zerstören und das Fugenmaterial zu entnehmen, um dann den Versuch unternehmen zu können, Teile der Wandverkleidung möglichst zerstörungsfrei zu demontieren. Der damit verbundene Arbeitsaufwand, der insbesondere nach Revision der technischen Einrichtungen auch die Wiederherstellung der Wandverkleidung einschließt, ist in vielen Fällen größer als der Aufwand, den die Wartung oder Reparatur der technischen Einrichtung selbst verursacht. Weil durch den gut zugänglichen Einbauraum unterhalb der Bodenfläche die Wartung bzw. Reparatur technischer Einrichtungen vereinfacht und erleichtert wird, ist die Dusche nicht nur im Umfang einer herkömmlichen technischen Ausgestaltung der Dusche reparaturfreundlicher, sondern sie bietet auch die Möglichkeit für zusätzliche Funktionen und somit zu einer Aufwertung der Dusche, die ansonsten aufgrund der zu befürchtenden Schwierigkeiten im Wartungs- oder Reparaturfall nicht in Betracht gezogen würde.

Viertens wird ein Austausch der Bodenfläche erleichtert, was beispielsweise aus unterschiedlichen Gründen wünschenswert sein kann: einerseits aufgrund von Beschädigungen. Andererseits kann z.B. in gewerblich verwendeten Duschen, z.B. in Hotelzimmern, ein Dekorwechsel wünschenswert sein, um die Ausgestaltung eines Badezimmers auf der Höhe der Zeit zu halten. Und aus funktionalen Gründen kann es beispielsweise wünschenswert sein, eine Bodenfläche gegen eine andere Bodenfläche auszuwechseln, die beispielsweise eine höhere Rutschsicherheit bietet. Dadurch, dass die Bodenfläche als bewegliches Element ausgestaltet ist und somit keinen integralen Bestandteil der Dusche in der Art bildet, wie es bei der Bodenfläche als Teil einer Duschwanne der Fall ist, wird die Handhabung und eine Auswechslung der Bodenfläche erleichtert.

Schließlich ist fünftens ästhetisch vorteilhaft, dass für die Revision bestimmter technischer Einrichtungen keine sichtbaren und ästhetisch störenden Wartungsklappen oder dergleichen im sichtbaren Bereich der Dusche als zusätzliche Elemente verbaut werden müssen. Vielmehr stellt die Bodenfläche der Dusche gleichzeitig auch eine Wartungsklappe dar. Insbesondere wenn mehrere technische Einrichtungen vorgesehen sind, die ansonsten ggf. mehrere Wartungsklappen erfordern würden, ermöglicht die als einzige Wartungsklappe dienende die Bodenfläche aufgrund ihrer Größe den Zugang zu mehreren technischen Einrichtungen.

In diesem Zusammenhang kann insbesondere vorteilhaft vorgesehen sein, dass keine sichtbaren Verriegelungselemente und auch keine Griffe vorhanden sein müssen, um die Bodenfläche aus ihrer Gebrauchsstellung zu lösen, bevor sie ihre Wartungsstellung bewegt werden kann. Vielmehr kann mit handelsüblichen Mitteln, die z.B. als Glasgreifer, Glasheber, Vakuumgreifer oder ähnlich bezeichnet werden, die Bodenfläche zunächst angehoben werden, bevor sie dann manuell erfasst und bis in ihre Wartungsstellung bewegt werden kann. Aufgrund der Zugkraft, die mittels der Glasheber aufgebracht werden kann, können nicht nur die Gewichtskraft der Bodenfläche selbst, sondern auch Verschlusskräfte überwunden werden, beispielsweise wenn die Bodenfläche durch eine Clips- oder Rastverbindung in ihrer Gebrauchsstellung gehalten wird.

Vorteilhaft kann vorgesehen sein, dass die Bodenfläche nicht frei beweglich ist, also lediglich wie ein frei beweglicher Deckel über dem Einbauraum liegt, sondern dass sie mittels eines Beschlags geführt ist. Dadurch wird die bewegliche Bodenfläche ebenso wie die Umgebung der Dusche vor mechanischen Beschädigungen geschützt: im Vergleich zu einer völlig frei beweglichen Bodenfläche, die für Wartungs- oder Reparaturarbeiten aus der Dusche entnommen würde und neben der Dusche für die Dauer der Arbeiten zwischengelagert werden müsste, ist die Bodenfläche durch den Beschlag geführt und in ihrer Beweglichkeit eingeschränkt. Beschädigungen wie Abplatzer, Ausbrüche an den Kanten oder dergleichen, die bei der Handhabung und beim Abstellen einer frei beweglichen, vergleichsweise großen und schweren Bodenfläche ansonsten zu befürchten wären, sind daher ausgeschlossen, ebenso wie Beschädigungen, die durch eine frei handhabbare, vergleichsweise große und schwere Bodenfläche ansonsten in der Umgebung der Dusche verursacht werden könnten, beispielsweise Beschädigungen von Fliesen oder dergleichen, aber auch Personenschäden durch Quetschungen oder dergleichen.

Vorteilhaft kann vorgesehen sein, dass die Bodenfläche kraftunterstützt beweglich ist. Kraftunterstützungsmittel können beispielsweise als Antriebsmittel ausgestaltet sein, z.B. in Form eines Elektromotors, der zusätzlich zu der manuell aufgebrachten Kraft eine motorische Kraft bereitstellt oder die manuelle Kraft gänzlich ersetzt. Die Antriebsmittel können als Getriebemittel ausgestaltet sein, so dass die manuell aufzubringende Leistung gleich bleibt, aber die erforderliche Betätigungskraft verringert ist. Die Kraftunterstützungsmittel können als Kraftspeicher ausgestaltet sein, z.B. in Form einer Feder oder eines Gegengewichts. Jedenfalls bewirken die Kraftunterstützungsmittel, dass die manuellen Betätigungskräfte reduziert sind, die erforderlich sind, um die Bodenfläche zwischen ihrer Gebrauchsstellung und ihrer Wartungsstellung zu bewegen. Durch ein Kraftunterstützungsmittel ist die Bodenfläche typischerweise nicht völlig frei beweglich, sondern geführt, mit den oben beschriebenen Vorteilen.

In einer Ausgestaltung kann vorgesehen sein, dass die Bodenfläche schwenkbar gelagert ist. Unabhängig davon, ob die Bodenfläche kraftunterstützt bewegt wird oder ausschließlich mit manuellen Bedienkräften betätigt wird, wird ein Teil der Gewichtslast der Bodenfläche stets durch den Schwenkbeschlag aufgenommen, so dass die zur Bewegung der Bodenfläche erforderlichen Kräfte verringert sind. Zudem stellt ein Schwenkbeschlag eine funktionssichere und technisch einfache Ausgestaltung eines Beschlags dar, verglichen beispielsweise mit einem Hubbeschlag in Form einer Teleskop- oder Scherenmechanik. Da die Halterung der Bodenfläche mittels eines Schwenkbeschlags als vorteilhaft angesehen wird, wird nachfolgend häufig diese Ausgestaltung erwähnt, ohne dass jedoch die Erfindung auf die Verwendung eines Schwenkbeschlags begrenzt ist. Auch die Kraftunterstützungsmittel können dazu beitragen, die Bodenfläche in ihrer Gebrauchsstellung zu halten. Für den Fall eines elektromotorischen Antriebs wurde bereits auf die Möglichkeit eines Getriebemotors mit selbsthemmendem Schneckengetriebe hingewiesen. Im Falle eines Kraftspeichers wie zum Beispiel einer Feder können die Anlenkpunkte der Feder so gewählt werden, dass eine Über-Totpunkt-Kinematik erreicht wird, die Feder, die sich zu entspannen bestrebt ist, also dann, wenn sich die Bodenfläche in ihrer Gebrauchsstellung befindet, die Bodenfläche abwärts zu drücken bestrebt ist und somit zuverlässig die Bodenfläche in ihrer Gebrauchsstellung hält. Bei der Schwenkbewegung der Bodenfläche nach oben wird zunächst die Feder geringfügig weiter gespannt, also ein Totpunkt erreicht, bevor die anschließende weitere Bewegung dann zu einer Entspannung der Feder führt und die Feder somit diese Bewegung unterstützt.

Die Abflussöffnung kann in der Bodenfläche angeordnet sein, und die Bodenfläche kann ringsum - z. B. mittels Silikonfugen - dicht an den Rand anschließen, so dass bei Bedarf die Silikonnähte aufgeschnitten werden können und die Bodenfläche zu Revisionszwecken anhebbar ist. Zwischen der Bodenfläche und dem umgebenden Rand kann jedoch auch ein geradlinig, L- oder U-förmig oder ringsum verlaufender Spalt vorgesehen sein, der die Ablauföffnung bildet bzw. das Wasser zu einer Ablauföffnung führt.

Vorteilhaft kann unterhalb der Bodenfläche eine Dichtung verlaufen, die als geschlossen umlaufender Ring angeordnet ist, so dass von der Dichtung ein Innenraum umschlossen wird, der gegen eine von außen eindringende Flüssigkeit abgedichtet ist. Dementsprechend kann ringsum um die Bodenfläche ein Wasser aufnehmender Spalt verlaufen, so dass die beim Duschen auftretenden Wassermengen zuverlässig abgeführt werden können. Die Form dieses geschlossenen Rings kann sich an den Abmessungen der Bodenfläche orientieren, so dass die Dichtung beispielsweise annähernd kreisrund, rechteckig oder auch davon abweichend verlaufen kann. Die Bodenfläche liegt mit ihrer Unterseite dieser Dichtung abdichtend an. Wasser, das von der Bodenfläche nach außen abläuft, kann daher unterhalb der Bodenfläche nicht in den von der Dichtung umschlossenen Innenraum gelangen, der auch als Einbauraum bezeichnet werden kann, weil dort die erwähnten technischen Einrichtungen untergebracht bzw. eingebaut werden können. Innerhalb dieses abgedichteten Einbauraums können auch solche technischen Einrichtungen untergebracht werden, die vor Feuchtigkeit geschützt werden sollen. Beispielsweise kann Elektrik vor Kurzschlüssen und dementsprechenden Funktionsausfällen geschützt werden, es können mittels der Dichtung aber auch nicht-elektrische Einrichtungen vor dem Einfluss des Wassers und beispielsweise vor Kalkablagerungen und dergleichen geschützt werden.

Die Dichtung kann als Elastomerdichtung ausgestaltet sein. Beispielsweise bieten Silikonwerkstoffe den Vorteil, über lange Zeit nicht zu verspröden und daher elastisch und dementsprechend dicht den beiden gegenüberliegenden Bauelementen anzuliegen, zwischen denen die gewünschte Abdichtung erzielt werden soll. Die Dichtung kann daher beispielsweise als handelsübliche Silikonschnur ausgestaltet sein, deren beiden Enden verklebt werden, um einen geschlossenen Ring zu schaffen. Zugunsten einer besonders hohen Abdichtungsleistung kann jedoch auch ein spezielles Dichtungsprofil verwendet werden, welches beispielsweise eine Dichtlippe aufweist oder sogar zwei oder mehr parallel zueinander verlaufende Dichtlippen. Ein solches Dichtungsprofil kann beispielsweise unterhalb der Bodenfläche verankert und in der Art ausgerichtet sein, dass die Dichtlippen nach oben weisen und der Bodenfläche anliegen. In einer Ausgestaltung kann das Dichtungsprofil im wesentlichen T-förmig ausgestaltet sein, so dass es einen aufrechten Steg aufweist, mit dem es in eine korrespondierende Nut eingesteckt und durch Klemmwirkung gehalten werden kann, und so dass es oberhalb dieses aufrechten Stegs einen liegenden Quersteg aufweist, der die Dichtungsfläche bildet, welche der Bodenfläche anliegt.

Die Wirkung der Dichtung kann insbesondere dann, wenn ein besonders zuverlässiger Schutz gegen Feuchtigkeit gewährleistet werden soll, durch eine zusätzliche Quellschnur unterstützt werden, welche innerhalb der ringförmig verlaufenden Dichtung angeordnet ist. Ebenso wie die Dichtung liegt auch die Quellschnur der Unterseite der Bodenfläche an. Sollte Flüssigkeit die Dichtung überwinden und in Kontakt mit der Quellschnur gelangen, so quillt die Quellschnur auf, führt zu einem vergrößerten Anpressdruck, mit welchem sie der Bodenfläche von unten anliegt, so dass dann durch die Quellschnur die gewünschte Abdichtung erzielt wird.

Unabhängig davon, ob eine Dichtung und/oder eine Quellschnur unterhalb der Bodenfläche vorgesehen ist, kann die Unterseite der Bodenfläche vorteilhaft eine Tropfkante bilden. Die Tropfkante verläuft außerhalb des Einbauraums, womit gemeint ist, dass sie nicht etwa oberhalb des Einbauraums verläuft, sondern dass sie vielmehr seitlich gegenüber dem Einbauraum nach außen versetzt verläuft. Auf diese Weise wird vermieden, dass sich Wasser an der Unterkante der Bodenfläche vom Rand der Bodenfläche bis in deren mittleren Bereich zieht, wo es ggf. mit den dort vorgesehenen technischen Einrichtungen in Kontakt kommen könnte oder auf die technischen Einrichtungen herabtropfen könnte. Vielmehr gelangt das Wasser lediglich bis zu der Tropfkante, sammelt sich dort und wird von dort nach unten abtropfen, und zwar außerhalb des Einbauraums. Beispielsweise kann die Tropfkante direkt am äußeren, umlaufenden Rand der Bodenfläche ausgestaltet sein, so dass ein möglichst großer, vom Wasser freier Einbauraum unterhalb der Bodenfläche bereitgestellt wird.

Die Installation der Dusche kann dadurch vereinfacht werden, dass möglichst viele Elemente werkseitig vorgefertigt werden und am Installationsort lediglich montiert zu werden brauchen. Beispielsweise kann ein Rahmen vorgesehen sein, der liegend ausgerichtet ist und eine Ablaufrinne aufweist. Die Abflussöffnung der Dusche schließt an diese Ablaufrinne an. Durch diese Konstruktion wird die Möglichkeit geschaffen, in dem Rahmen eine großvolumige Ablaufrinne unterzubringen, die problemlos die beim Duschen anfallende Wassermenge aufnehmen und abführen kann. Der Duschboden kann diese Ablaufrinne teilweise überdecken, so dass im Sinne der Revisionsmöglichkeit ein problemloser Zugang zu der Ablaufrinne dadurch möglich ist, dass der Duschboden hochgeschwenkt werden kann. An den Duschboden angrenzend ist lediglich ein vergleichsweise schmaler Spalt als Wasserablauf erforderlich, was einerseits ästhetisch vorteilhaft ist, zudem insbesondere hinsichtlich der Vermeidung von Verletzungs- und Unfallgefahren vorteilhaft ist, und was auch unter praktischen Gesichtspunkten vorteilhaft ist, weil herabfallenden Kleinteile wie z. B Verschlussdeckel von Shampooflaschen oder dergleichen nicht in die Ablaufrinne fallen können, wo sie nur umständlich erreichbar wären, oder wo sie sogar in eine Abflussöffnung geraten könnten und somit verloren wären.

Der Rahmen kann in einer Ausgestaltung einen Beschlag tragen, der dazu dient, bei ihrer Bewegung die Bodenfläche zu führen und zu halten, beispielsweise einen Hubbeschlag oder einen Schwenkbeschlag, an dem die Bodenfläche befestigt ist. Der Rahmen kann in an sich bekannter Weise über höhenverstellbare Stellfüße, Keile oder dergleichen auf einem Untergrund aufgestellt und ausnivelliert werden, so dass die auf dem Rahmen aufliegende Bodenfläche der Dusche beispielsweise exakt horizontal ausgerichtet sein kann, oder so dass durch eine geringfügige Neigung des Rahmens das Abfließen des Wassers sowohl von der Bodenfläche als auch innerhalb der Ablaufrinne unterstützt werden kann. Falls eine exakt horizontale Nivellierung des Rahmens vorgesehen ist, kann die Ablaufrinne vorteilhaft eine zur Abflussöffnung zunehmende Tiefe aufweisen, also einen schräg abwärts verlaufenden Rinnenboden, so dass das in der Ablaufrinne aufgenommene Wasser automatisch in die Abflussöffnung strömt.

Die Bodenfläche kann in einer Ausgestaltung ausschließlich auf dem erwähnten Rahmen abgestützt sein, beispielsweise indem sie auf der bereits erwähnten Dichtung aufliegt, die in dem Rahmen verlegt ist. Nicht erfindungsgemäß kann die Bodenfläche auch anderweitig abgestützt sein, beispielsweise mittels einzelner stabförmiger Stützen, die von der Bodenfläche abwärts verlaufen, in dem Einbauraum, der von dem Rahmen umschlossen ist, und die sich beispielsweise auf dem Estrich abstützen oder auf der Oberseite einer Geschossdecke abstützen, welche den Boden des Badezimmers bildet, also jeweils auf dem Untergrund, auf dem auch der Rahmen steht

Falls Stützen verwendet werden, kann beispielsweise auf den erwähnten Rahmen vollständig verzichtet werden. Das von der Bodenfläche ablaufende Wasser kann beispielsweise von einer Rinne aufgefangen werden, die an der Bodenfläche befestigt ist. Und der Schwenkbeschlag, der die Bodenfläche zwischen ihrer Gebrauchsstellung und ihrer Wartungsstellung führt, kann beispielsweise fest am Boden des Badezimmers verankert werden. Nachfolgend wird jedoch überwiegend von einer Ausgestaltung der Dusche ausgegangen und diese Ausgestaltung beschrieben, bei welcher der erwähnte Rahmen Verwendung findet.

Insbesondere wenn die Bodenfläche besonders großflächig ausgestaltet ist, beispielsweise um einen dementsprechend großen Einbauraum zur Unterbringung technischer Einrichtungen unterhalb der Bodenfläche zur Verfügung zu stellen, kann vorgesehen sein, dass die Bodenfläche nicht nur im Bereich ihres außen umlaufenden Randes auf dem Rahmen aufliegt, sondern zusätzlich auch im Bereich innerhalb des Rahmens abgestützt wird. Daher können eine oder mehrere Stützen verwendet werden, um die Bodenfläche innerhalb des Rahmens, beispielsweise in ihrem mittleren Bereich, abzustützen und unerwünschte Durchbiegungen zu verhindern. Die Anordnung der Stützen kann individuell bei jeder Installation einer Dusche gewählt werden, um die Position der Stützen so zu bestimmen, dass diese zwischen den jeweils vorgesehenen technischen Einrichtungen angeordnet sind.

Eine Stütze kann an der Unterseite der Bodenfläche fest montiert sein, so dass sie gemeinsam mit der Bodenfläche zwischen deren Gebrauchsstellung und deren Wartungsstellung schwenkbar ist. **In** diesem Fall muss unterhalb der Bodenfläche zwischen den dort vorgesehenen technischen Einrichtungen ein ausreichender Freiraum vorgesehen sein, um eine kollisionsfreie Bewegung der Stütze zu gewährleisten. Alternativ kann daher vorgesehen sein, eine Stütze getrennt von der Bodenfläche unterhalb der Bodenfläche anzuordnen, so dass die Stütze auch in einem sehr kleinen Freiraum zwischen zwei technischen Einrichtungen untergebracht werden kann, da sie dort stets ortsfest verbleibt.

Die Stütze muss allerdings nicht unbedingt aufrecht verlaufen und die auf die Bodenfläche einwirkende Last unmittelbar in den Boden, z.B. in einen Estrich, einen Betonboden oder eine Beton-Geschossdecke ableiten. Vielmehr kann die Stütze auch liegend verlaufen, als Traverse, und sich beispielsweise mit ihren beiden Enden an dem Rahmen abstützen, so dass der Lastabtrag von der Bodenfläche über die Stütze, den Rahmen und ggf. Stellfüße bis zu dem Untergrund erfolgt, auf dem der Rahmen steht.

Falls die Stütze als Traverse ausgestaltet ist und sich mit ihren beiden Enden an dem Rahmen abstützt, können der Rahmen und die Stütze vorteilhaft so ausgestaltet sein, dass die Stütze an unterschiedlichen Stellen an den Rahmen anschließen kann. Dies ermöglicht einerseits, durch die unterschiedliche Montagepositionen wahlweise eine oder mehrere Stützen zu montieren, und weiterhin ermöglicht dies, den Montageort einer Stütze in Anpassung daran zu wählen, dass eine Kollision mit technischen Einrichtungen vermieden wird, die in dem Einbauraum unterhalb der Bodenfläche angeordnet sind, so dass die Dusche sowohl mit diesen technischen Einrichtungen als auch mit der Stütze ausgestattet werden kann. Vorteilhaft kann eine stufenlose Verschiebbarkeit der Stütze am Rahmen vorgesehen sein, zumindest in einem für die Aufnahme der Stütze vorgesehenen Bereich des Rahmens. Dadurch kann die Position der Stütze optimal an die technischen Einrichtungen angepasst werden, die innerhalb des vom Rahmen umgebenen Einbauraum angeordnet sind und die z. B. an der Unterseite der Bodenfläche befestigt sein können oder auf dem Untergrund stehen können, z.B. einem Estrich oder einer Betondecke.

Die Abflussöffnung, die im Rahmen vorgesehen ist, kann grundsätzlich nach unten führen. Vorteilhaft jedoch kann vorgesehen sein, dass sie nicht nach unten, sondern vielmehr seitlich und zwar radial nach innen verläuft, in den vom Rahmen umschlossenen Bereich, der als Einbauraum für technische Einrichtungen zur Verfügung steht. Das von der Dusche abfließende Wasser kann daher von der Abflussöffnung zu einem fest installierten Abfluss wie z.B. einer starren Abflussleitung geführt werden, und falls in diesem Bereich an Anschlussstücken Undichtigkeiten auftreten sollten, sind diese Bereiche problemlos zugänglich, wenn die Bodenfläche der Dusche in ihre Wartungsstellung geschwenkt ist, so dass Reparaturen dementsprechend problemlos und mit geringem Aufwand durchgeführt werden können.

Außerdem weist der Rahmen eine Bauhöhe auf, und eine Ablaufrinne, die innerhalb des Rahmens verläuft, weist ebenfalls eine gewisse Tiefe auf. Ein solcher Aufbau einer vorschlagsgemäßen Dusche schafft Voraussetzungen, die sich beispielsweise von denen einer herkömmlichen Duschtasse erheblich unterscheiden: die Duschtasse weist eine Materialstärke von wenigen Millimetern auf und die AbflussÖffnung in der Duschtasse ist als eine Bohrung ausgestaltet, die entsprechend der Wandstärke der Duschtasse eine axiale Länge - und entsprechend ihrer Einbaulage dementsprechend eine Höhe - von wenigen Millimetern aufweist, wobei sich ein herkömmlicher, als Rohrbogen ausgestalteter Siphon nach unten an diese Abflussöffnung der Duschtasse anschließt, um einen Geruchsverschluss zu schaffen. Im Unterschied dazu weisen einerseits der Rahmen und andererseits die darin verlaufende Ablaufrinne einer vorschlagsgemäßen Dusche bereits eine gewisse Höhe auf und bieten so die Möglichkeit, mit einer seitlich daran anschließenden Abflussleitung einen Geruchsverschluss in Art eines Siphons zu schaffen, so dass im Vergleich zu herkömmlich ausgestalteten Siphons, die unterhalb der Bodenfläche der Dusche montiert werden, der Geruchsverschluss vergleichsweise flach ausgestaltet werden kann, so dass insgesamt eine vorschlagsgemäße Dusche mit einer besonders geringen Aufbauhöhe verwirklicht werden kann.

Als so genannte Aufstauhöhe wird in diesem Zusammenhang die Höhe des Wasserpegels innerhalb eines herkömmlichen Siphons zeichnet, sie kann beispielsweise etwa 50 mm betragen. Einerseits ist eine größere Aufstauhöhe insofern vorteilhaft, als sie gegenüber Druckschwankungen unempfindlicher ist. Andererseits ist eine möglichst flache Ausgestaltung des Wasserablaufs einer Dusche vorteilhaft, um eine möglichst geringe Aufbauhöhe der Dusche im Bodenbereich zu gewährleisten, beispielsweise um einen stufenlosen, barrierefreien Zugang in die Dusche verwirklichen zu können. Wenn die im erwähnten Rahmen verlaufende Ablaufrinne einer vorschlagsgemäßen Dusche als Teil des Geruchsverschlusses genutzt wird, indem beispielsweise vorgesehen ist, dass Wasser bis zu einer gewissen Höhe auch nach Abstellen des Wassers innerhalb der Rinne stehen bleibt, kann dies die Kombination beider Vorteile ermöglichen, in dem einerseits eine vergleichsweise hohe Aufstauhöhe erzielt werden kann und gleichzeitig die Dusche lediglich eine geringe Aufbauhöhe ihres Wasserablaufs erfordert.

Beispielsweise kann der erwähnte Rahmen eine Höhe von 5 bis 7 cm aufweisen, und die Ablaufrinne kann innerhalb des Rahmens eine Tiefe von 2 bis 5 cm aufweisen, wobei die Breite des Rahmens so gewählt ist, dass angesichts der Tiefe der Ablaufrinne deren Breite an die Zapfstellen bzw. Austrittsdüsen der Dusche und somit an die maximal ausströmende Wassermenge angepasst ist. Insgesamt ist der Querschnitt der Ablaufrinne daran angepasst, die pro Zeiteinheit ausströmende Wassermenge aufzunehmen und zur Abflussöffnung zu führen. Die Bodenfläche ist erfindungsgemäß über Wägezellen abgestützt.

Dies kann entweder dadurch verwirklicht werden, dass die Bodenfläche direkt auf Wägezellen aufliegt, oder indirekt dadurch, dass beispielsweise der erwähnte Rahmen über Wägezellen am Untergrund abgestützt ist. Jedenfalls kann mittels der Wägezellen eine Gewichtsbelastung der Bodenfläche erfasst werden. Es kann das Gewicht von Personen erfasst werden, welche die Dusche benutzen und sich auf der Bodenfläche befinden. Eine separate Personenwaage wird in diesem Fall überflüssig und der Raum, in dem sich die Dusche befindet, kann daher aufgeräumter und ästhetisch vorteilhaft wirken.

Die erfassten Gewichtsdaten werden drahtlos zu einer Anzeige übermittelt. wobei rein beispielhaft nachfolgend ein Smartphone erwähnt wird, stellvertretend auch für andere zu diesem Zweck geeignete Geräte. Spritzwassergeschützte Smartphones ermöglichen das Ablesen der Gewichtsdaten direkt in der Dusche, andernfalls kann das Gewicht jedoch nach Verlassen der Dusche auf dem Smartphone abgelesen werden. Als Anzeige kann jedoch auch ein im Badezimmer installiertes Display genutzt werden, z. B. in einem Badezimmerspiegel bzw. Spiegelschrank, wobei der Spiegel bereichsweise hinter- und durchleuchtet werden kann und zur Anzeige von alphanumerischen oder auch symbolhaften Darstellungen genutzt werden kann.

Unabhängig davon, dass eine Gewichtserfassung und/oder eine Gewichtsanzeige erfolgt, kann in einer Ausgestaltung der Dusche vorgesehen sein, dass die Anwesenheit einer Person sensorisch erfasst wird, beispielsweise um automatisch Wasser-Austrittsdüsen zu öffnen und Wasser strömen zu lassen Das kann die automatische Einschaltung einer Handbrause oder auch eines weiter oben angeordneten Duschkopfes betreffen. Die Erfassung der Anwesenheit einer Person in der Dusche kann auch zusätzlich zu der Druck- bzw. Gewichtserfassung erfolgen, beispielsweise durch Näherungssensoren im Boden oder am Eingang der Dusche, durch einen Radar-, Ultraschall- oder Infrarotsensor, mittels einer Induktionsschleife oder dergleichen.

Insbesondere jedoch kann vorgesehen sein, diese Funktion bei Wasser-Austrittsdüsen vorzusehen, die in der Bodenfläche der Dusche angeordnet sind und in Art einer Fußreflexzonenmassage die Füße der sich in der Dusche aufhaltenden Person von unten beaufschlagen.

Dabei muss nicht vorgesehen sein, dass diese unten angeordneten Wasser-Austrittsdüsen grundsätzlich automatisch eingeschaltet werden, wenn eine Person die Dusche betritt. Die grundsätzliche Aktivierung der unten angeordneten Wasser-Austrittsdüsen erfolgt vielmehr vorzugsweise manuell, indem beispielsweise die Funktion "Fußmassage" manuell gewählt wird. Anschließend kann die automatische Aktivierung der unten angeordneten Wasser-Austrittsdüsen darauf beschränkt sein, jeweils lediglich diejenigen Wasser-Austrittsdüsen zu aktivieren, auf denen sich die Füße der Person momentan befinden, so dass je nach dem momentanen Standort der Person die betreffenden unten angeordneten Wasser-Austrittsdüsen automatisch ein- oder ausgeschaltet werden.

Die Behandlungsintensität, mit welcher die Fußsohlen behandelt werden, kann vorteilhaft über die Regelung des Wasserdrucks einstellbar sein. Vorteilhaft ist dabei ein System zur Fußerkennung, welches eine Sensorik umfasst, die mit einer Auswertung- und Steuerungseinheit verbunden ist. Beispielsweise durch eine optische Erfassung oder die Druckerfassung eines Fußes auf der Bodenfläche wird die Positionierung des Fußes auf der Bodenfläche ermittelt und auf Basis dieser Information nur die Wasserdüsen aktiviert, die sich unterhalb des Fußes befinden. Dadurch wird sichergestellt, dass kein unnötiger Wasseraustritt erfolgt.

Anstelle von Wasser-Austrittsdüsen können auch Vibrationselemente in der Bodenfläche der Dusche angeordnet sein, die eine solche Fußreflexzonenmassage ermöglichen. Derartige Vibrationselemente sind beispielsweise aus Mobilfunkgeräten bekannt und können mit geringen Spannungen betrieben werden, welche die Anwendung in einer Dusche zulassen.

Außerdem kann bei Installation der Dusche in einem Privathaushalt davon ausgegangen werden, dass mehrere Personen, welche die Dusche innerhalb des Haushaltes benutzen, unterschiedliche Körpergewichte aufweisen. Das jeweilige Körpergewicht einer Person kann sich zwar verändern, wird sich typischerweise jedoch vom Körpergewicht einer zweiten Person desselben Haushalts so unterscheiden, dass diese beiden Personen immer noch anhand ihrer unterschiedlichen Gewichte unterschieden werden können. Dementsprechend können unterschiedliche Szenarien in einer elektronischen Steuerung abgespeichert werden, wobei jedes Szenario einer bestimmten Person zugeordnet wird. Die Person kann beispielsweise festlegen ob eine bestimmte Beleuchtung oder bestimmte Wasser-Austrittsdüsen, beispielsweise von mehreren unterschiedlichen Duschköpfen, aktiviert werden sollen. Sobald die Anwesenheit dieser Person aufgrund des erfassten Gewichts automatisch mittels der elektronischen Steuerung festgestellt wird, wird erfindungsgemäß ebenso automatisch das von dieser Person gewünschte Szenarium aktiviert werden.

Vorteilhaft kann unterhalb der Bodenfläche als technische Einrichtung ein Wassermelder installiert sein. Ähnlich wie Rauchmelder sind derartige Wassermelder mit einer Langzeit-Batterie ausgestattet und signalisieren die Anwesenheit - diesem Fall: von Feuchtigkeit - durch ein lautes akustisches Warnsignal. Der Wassermelder kann beispielsweise nahe der Abflussöffnung oder der Abflussleitung abgelegt werden, so dass bei eventuell auftretenden Undichtigkeiten möglichst bald diese Undichtigkeit signalisiert wird und bauphysikalische Schäden, wie sie ansonsten bei länger anhaltenden, unerkannten Undichtigkeiten auftreten können, vermieden werden können. Dabei ist besonders vorteilhaft, dass mittels eines dort angeordneten Wassermelders nicht nur Undichtigkeiten im Bereich der Dusche selbst erfasst werden. Vielmehr wird bei einer Undichtigkeit, die irgendwo im Badezimmer auftritt, das Wasser auf der Bodenplatte des Badezimmers voraussichtlich auch in den Bereich der Dusche gelangen, so dass dann der dort befindliche Wassermelder anspricht.

Erfindungsgemäß ist unterhalb der Bodenfläche im Einbauraum als technische Einrichtung eine Ventilanordnung angeordnet, die umgangssprachlich als digitale Ventilsteuerung bezeichnet wird und zwei oder mehrere elektrisch ansteuerbare Ventile. Bei Verwendung von lediglich zwei Ventilen können diese als Mischer dazu dienen, Kalt- und Warmwasser in einem einstellbaren Mengenverhältnis zusammenzuführen. Beispielsweise kann die von einer duschenden Person betätigte Duscharmatur, die beispielsweise einem Brausekopf vorgeschaltet ist, in der Wand der Dusche angeordnet und an eine Mischwasserleitung angeschlossen sein und lediglich dazu dienen, die Wassermenge zu dosieren bzw. die Mischwasserleitung ganz zu sperren. Die Temperatur hingegen wird mittels der Ventilsteuerung eingestellt, so dass von der Ventilsteuerung bis zur Duscharmatur das Mischwasser, welches aus Kalt- und Warmwasseranteilen besteht durch die Mischwasserleitung geführt wird. Wenn sensorisch, zum Beispiel durch das Körpergewicht, automatisch erfasst wird, welche Person sich in der Dusche aufhält, kann ein für diese Person hinterlegtes "Duschprofil" von einer automatischen Steuerung abgerufen werden. Im einfachsten Fall enthält dieses Duschprofil lediglich die Information über die von dieser Person bevorzugte Temperatur des Duschwassers, so dass die digitale Ventilsteuerung ein entsprechend temperiertem Mischwasser bereitstellt. Es hat sich herausgestellt, dass individuell jede Person eine bevorzugte Wassertemperatur beim Duschen wünscht und von dieser Wunschtemperatur nur selten abweicht. Auch wenn vor oder beim Öffnen eines Duschwasserauslasses - z. B. Brausekopf - keine Temperatureinstellung erfolgt ist, kann es daher sinnvoll sein, den Duschwasserauslass zu öffnen, und zwar mit Duschwasser, das die Wunschtemperatur aufweist, sofern diese Wunschtemperatur in einem Duschprofil hinterlegt und die Person, welche momentan die Dusche benutzt, identifiziert ist.

Ohne die Identifizierung einer bestimmten Person kann bei Benutzung einer Dusche mit anderen Mitteln eine Wunschtemperatur bestimmt werden, so dass für Gäste im privaten Bereich oder in Hotels ein Duschprofil nicht einer bestimmten Person zugeordnet sein muss, sondern vielmehr unterschiedliche Duschprofile hinterlegt sein können und über die Verwendung eines bestimmten Steuerbefehls das jeweils gewünschte Duschprofil ausgewählt werden kann. Es kann sich dabei um ein Eingabefeld innerhalb oder außerhalb der Dusche handeln, oder vorteilhaft um einen drahtlosen Empfänger für Steuerungsbefehle, so dass z. B. mittels eines RFID-Tags, mittels einer auf einem Mobiltelefon laufenden App und der NFC- oder Bluetooth-Funktechnik, oder mittels eines Sensors für Steuerungsgesten oder dergleichen ein bestimmtes Duschprofil ausgewählt werden kann, im einfachsten Fall also die Wunschtemperatur des Duschwassers bestimmt werden kann.

Bei Verwendung von mehr als zwei Ventilen wird erfindungsgemäß die digitale Ventilsteuerung dazu genutzt Duschwasser für unterschiedliche Wasserauslässe in der Dusche bereitzustellen, beispielsweise eine Kopf- oder Deckenbrause, oder Wasserdüsen, die in den Wänden der Dusche oder in der Bodenfläche angeordnet sein können. Das erwähnte Duschprofil kann in diesem Fall Informationen darüber enthalten, in welcher zeitlichen Abfolge und mit welcher Duschwassertemperatur die einzelnen Wasserauslässe geöffnet oder geschlossen werden sollen.

Die Programmierung eines Duschprofils kann außerhalb der Dusche erfolgen, wobei als Eingabegerät ein Mobilgerät wie ein Mobiltelefon, ein Tablet oder dergleichen genutzt werden kann, oder ein ortsfester Desktop-PC, oder Eingabemittel die in entsprechend "smart" ausgestalteten Einrichtungen eines Badezimmers vorhanden sind und die auch während des Duschvorgangs eine Beeinflussung der digitalen Ventilsteuerung ermöglichen. Beispielsweise kann in der Nähe der Dusche eine Sensorfläche angeordnet sein, so dass mittels einer Wischgeste die momentane Duschwassertemperatur abweichend von dem hinterlegten Duschprofil erhöht oder gesenkt werden kann. Die Sensorfläche kann eigens als Betätigungselement für die Dusche vorgesehen sein, sie kann jedoch auch beispielsweise in einem Badezimmerschrank, hinter einer Spiegelfläche oder dergleichen angeordnet sein.

In einer Ausgestaltung kann die Bodenfläche lösbar an dem Schwenkbeschlag befestigt sein, so dass sie auf einfache Weise ausgetauscht werden kann, beispielsweise aus dekorativen Gründen oder gegen eine Bodenfläche mit höherer Rutschfestigkeit, oder wenn sie durch herabgefallene Gegenstände beschädigt worden sein sollte
In einer Ausgestaltung kann die Bodenfläche eine obere Dekorschicht aufweisen, welche die Haptik und Optik der Bodenfläche für die Personen bestimmt, welche die Dusche benutzen. Unter dieser Dekorschicht ist eine Stützschicht vorgesehen, z. B. aus Metall, beispielsweise in Form eines Edelstahlblechs. Eine metallische Stützschicht ermöglicht eine problemlose Verbindung an den Schwenkbeschlag in einer für den Metallbau üblichen Art und Weise, z.B. durch Schweißen, durch Schraubverbindungen oder dergleichen, während die Dekorschicht beispielsweise aus Naturstein, Fliesen, angerautem Glas, hölzernen Planken oder dergleichen bestehen kann oder in Form einer rutschhemmenden, aus Kunststoff bestehenden Beschichtung der Stützschicht ausgestaltet sein kann, ggf. mit eingelagerten Partikeln, welche die Oberflächenrauigkeit der Dekorschicht und somit deren Rutschsicherheit weiter erhöhen.

Um das Gewicht der gesamten Bodenfläche möglichst gering zu halten, kann die Bodenfläche an ihrer Unterseite Verstärkungsprofile aufweisen. Um eine Durchbiegung der Bodenfläche unter dem Gewicht der jeweiligen Benutzer zu vermeiden und beispielsweise eine dadurch bedingte Rissbildung in einem vergleichsweise spröden Material der Bodenfläche auszuschließen, beispielsweise in der oben erwähnten Dekorschicht, muss daher die Materialstärke des plattenartigen, flächenhaften Materials der Bodenfläche nicht so groß gewählt werden, um die erwähnten Durchbiegungen zuverlässig ausschließen zu können. Vielmehr kann unterhalb des plattenartigen, flächenhaften Materials mithilfe von Winkel- oder Rohrprofilen eine Verstärkung der Bodenfläche erfolgen, welche bei vergleichsweise geringem zusätzlichem Gewicht die gewünschte Aussteifung der Bodenfläche gewährleistet und die erwähnte Durchbiegung verhindert.

Die Verstärkungsprofile bieten auch die Möglichkeit, eine Stütze an der Unterseite der Bodenfläche zu montieren. Die exakte Lage, wo eine Stütze an einem Verstärkungsprofil befestigt wird, und dementsprechend an welcher Stelle die Stütze unterhalb der Bodenfläche angeordnet wird, kann dabei in Abhängigkeit von den jeweils verbauten technischen Einrichtungen bestimmt werden, so dass die Stütze mitsamt der Bodenfläche zwischen deren Gebrauchsstellung und deren Wartungsstellung bewegt wird. Falls die Stütze jedoch getrennt von der Bodenfläche ortsfest unterhalb der Bodenfläche angeordnet ist, kann die Bodenfläche mit einem Verstärkungsprofil auf der Stütze aufliegen, wenn sie sich in ihrer Gebrauchsstellung befindet. Auf diese Weise wird die punktuelle Unterstützung der Bodenfläche dort, wo sie auf der Stütze aufliegt, mittels des Verstärkungsprofils über einen größeren Bereich der Bodenfläche verteilt und eine Durchbiegung der Bodenfläche besonders wirksam verhindert.

Vorteilhaft kann der Bodenfläche ein Dämpfungselement zugeordnet sein, so dass eine Bewegung der Bodenfläche gedämpft wird. Dabei kann vorteilhaft ein einseitig wirkendes Dämpfungselemente verwendet werden, so dass die Aufwärtsbewegung ungehindert erfolgen kann, um die Bodenfläche aus ihrer Gebrauchsstellung in ihre Wartungsstellung zu bringen, während die Absenkbewegung gedämpft und dementsprechend gebremst erfolgt und somit Schäden vermieden werden, die ansonsten beim ungebremsten Anschlagen der Bodenfläche in ihrer Gebrauchsstellung auftreten könnten.

Beispielsweise kann der Bodenfläche eine Gasdruckfeder zugeordnet sein, welche einerseits das Anheben der Bodenfläche unterstützt und andererseits beim Absenken der Bodenfläche die gewünschte Dämpfung bewirkt.

Der unterhalb der Bodenfläche bereitgestellte Einbauraum kann beispielsweise dazu genutzt werden, als technische Einrichtung einen Wärmetauscher zu installieren. Beim Duschen verbrauchtes Warmwasser wird daher zunächst durch den Wärmetauscher geführt und gelangt erst anschließend in die Abflussleitung. Kaltwasser, welches zum Duschen verwendet werden soll, wird zunächst in den Wärmetauscher geführt und dort vorgewärmt, bevor es zu den Austrittsdüsen eines Duschkopfes gelangt. Dementsprechend kann, wenn eine bestimmte Duschtemperatur eingestellt ist, das Kaltwasser mit einer vergleichsweise geringeren Temperatur zugeführt werden, so dass Heizenergie eingespart werden kann. Oder es ist, bezogen auf eine bestimmte Temperatur des herangeführten Kaltwassers, eine geringere Menge heißen Wassers erforderlich, um im Mischer der Duscharmatur die für das Duschen gewünschte Warmwassertemperatur einzustellen. Insbesondere in Einrichtungen, in denen eine Vielzahl von Duschen installiert ist, beispielsweise in Hotels, kann der energetische Aufwand zur Bereitstellung von ausreichenden Mengen heißen Duschwasser hierdurch wirkungsvoll reduziert werden, insbesondere da die Erfordernis zur Bereitstellung des heißen Duschwasser typischerweise auf einen engen Zeitraum konzentriert ist und nicht über einen größeren Zeitraum verteilt werden kann. Sollte der Wärmetauscher verstopfen, undicht werden oder aus anderen Gründen eine Wartung erfordern, oder sollte er aufgrund des technischen Fortschritts gegen einen Wärmetauscher mit höherem Wirkungsgrad ausgetauscht werden, so ist der Zugang zu dem Wärmetauscher problemlos möglich.

Der Einbauraum unterhalb der Bodenfläche kann bei einer Ausgestaltung der Dusche dazu genutzt werden, als technische Einrichtung eine Anlage zum Duschwasser-Recycling unterzubringen. Aus der Praxis sind unterschiedliche Ansätze bekannt, um das Duschwasser zu recyceln. Beispielsweise kann das verbrauchte Duschwasser in einer ersten Ausgestaltung durch eine mehrstufige Sieb- und Filtrationsanlage geleitet werden, bevor es wieder zu den Austrittsdüsen der Dusche zurückgeführt wird. **In** einer zweiten Ausgestaltung wird das verbrauchte Duschwasser hochfrequent sensorisch überprüft und bei Ermittlung einer ansprechend hohen Schmutzfracht bzw. einer bestimmten Wasserqualität verworfen, also zur Abflussleitung geführt. Bei der automatischen, sensorischen Erfassung einer demgegenüber höheren Wasserqualität hingegen wird das verbrauchte Duschwasser wieder zu den Austrittsdüsen der Dusche zurückgeführt. Beide Ausgestaltungen können auch in Kombination angewendet werden, so dass das zurückgeführte, wiederverwendete Duschwasser gefiltert wird, bevor es zum Duschkopf gelangt. **In** jedem Fall wird durch das Recycling des Duschwassers erstens Wärmeenergie eingespart, die ansonsten zum Aufheizen von kaltem Frischwasser erforderlich wäre, und zweitens kann die Menge des zum Duschen erforderlichen und auf Trinkwasserqualität aufbereiteten Frischwassers erheblich reduziert werden. Die Möglichkeit, unterhalb der Bodenfläche einen Einbauraum für technische Einrichtungen, beispielsweise für Sanitärinstallationselemente zur Verfügung zu stellen, kann für einen grundsätzlich neuartigen Aufbau einer Dusche genutzt werden: bei einer herkömmlichen Dusche sind die Duscharmaturen typischerweise an einer Wand installiert, die als fester Bestandteil eines Gebäudes ausgestaltet ist, z.B. an einer festen, gemauerten Wand. Auch eine zu dieser Duscharmatur führende Wasserleitung, eine sogenannte Armaturenleitung, wird fest in dieser Wand installiert, beispielsweise in einem zuvor in die Wand eingebrachten Schlitz verlegt. Anschließend wird diese Wand mit einer Wandverkleidung versehen, beispielsweise mit Fliesen, Natursteinplatten oder dergleichen. Bei Reparaturen an der Armaturenleitung oder an der Duscharmatur selbst ist daher eine Beschädigung und spätere Instandsetzung der Wandverkleidung typischerweise unumgänglich.

In einer vorteilhaften Ausgestaltung der vorschlagsgemäßen Dusche hingegen kann vorgesehen sein, dass die Duschwand, welche die Dusche begrenzt, nicht als fest installierter, z.B. gemauerter Teil eines Gebäudes anzusehen ist, sondern vielmehr als Element der Dusche selbst, welches installiert oder auch problemlos wieder deinstalliert werden kann. Abweichend von dem vorliegenden Vorschlag, der unterhalb der Bodenfläche einen Einbauraum für technische Einrichtungen vorsieht, kann jedoch auch vorgesehen sein, derartige, als vormontierte Tafeln ausgestalteten Duschwände auch dann zu verwenden, wenn der Boden der Dusche nicht die vorschlagsgemäß vorgesehene, schwenkbewegliche Bodenfläche aufweist.

Die Duscharmatur kann an einer solchen Duschwand selbst installiert sein und nicht an der Gebäudewand. Die gesamte Duschwand kann daher wie eine vormontierte Tafel aufgestellt werden und trägt bereits die Duscharmatur und auch die Armaturenleitung, die beispielsweise für die Zufuhr von kaltem oder heißem Wasser zur Duscharmatur vorgesehen ist. Die Armaturenleitung verläuft von der Duscharmatur vorzugsweise bis unter die Bodenfläche der Dusche. Dort kann sie mittels einer Schnellkupplung an eine Kalt- oder Heißwasserleitung angeschlossen werden. Im Falle einer Revision kann die Bodenfläche der erfindungsgemäßen Dusche in ihre Wartungsstellung angehoben werden, die Schnellkupplung getrennt werden und die Duschwand mitsamt der Duscharmatur und der Armaturenleitung demontiert werden. Falls die Dusche nicht erfindungsgemäß ausgestaltet ist und keine bewegliche Bodenfläche aufweist, kann der Revisionsaufwand dadurch vergleichsweise gering gehalten werden, dass nach dem Aufnehmen der auch als Duschtasse bezeichneten Duschwanne die darunter angeordneten Anschlüsse, z. B. die erwähnten Schnellkupplungen zugänglich sind und eine Entnahme der Duschwand samt Armatur und Armaturenleitung erleichtern. Insbesondere im gewerblichen Bereich, beispielsweise für Hotels und ähnliche Einrichtungen können daher innerhalb kürzester Zeit Renovierungen durchgeführt und die Duschen durch Verwendung neuer Duschwände neu gestaltet werden, oder es können Reparaturen an den Duscharmaturen durchgeführt werden, ohne die Duschwände bzw. Wandverkleidungen beschädigen und anschließend erneuern oder ausbessern zu müssen.

Die solcher Art einfach und problemlos innerhalb kurzer Zeit revisionierbaren Duschwände ermöglichen grundsätzlich die Integration technischer Elemente, da der Zugang zu derartigen Elementen sowie deren Wartung auf einfache und kostensparende Weise möglich ist.

**In** diesem Zusammenhang kann vorteilhaft vorgesehen sein, dass Armaturen in die Duschwand integriert sein können, so dass sie einen verringerten, in die Dusche hineinragenden Wandvorsprung bilden oder sogar völlig bündig in die Duschwand eingelassen sind. Die Armaturen können sogar auf der Rückseite der Duschwand angeordnet sein, so dass die Duschwand auf ihrer in die Dusche weisenden Vorderseite dort unterbrechungslos und geschlossen ausgestaltet sein kann, wo sich die Armaturen befinden. Die Betätigung der Armaturen kann beispielsweise mithilfe von Näherungssensoren erfolgen. Durch einfache Berührungen können beispielsweise bestimmte Wasserauslässe ausgewählt werden - z.B. ein hoch montierter und ortsfest installierter Duschkopf oder eine an einem Schlauch befindliche Handbrause, oder dergleichen. Eine stufenlose Betätigung einer Armatur kann durch die Dauer der Berührung oder ggf. mittels einer Gestensteuerung ermöglicht werden, um beispielsweise die Wassermenge und die Wassertemperatur steuern und stufenlos beeinflussen zu können.

Ebenfalls können in die Duschwand Wasser-Austrittsdüsen integriert sein, die beispielsweise die schräg oder horizontal ausgerichtete Wasserstrahlen aus der Duschwand ausströmen lassen. Abgesehen von der somit optisch reduzierten und vorteilhaften Ausgestaltung der Dusche sowie der einfacheren Reinigungsmöglichkeit können derartige Wasser-Austrittsdüsen beispielsweise die oben genannte Handbrause ersetzen. Zudem können sie für eine Wasser-Massage genutzt werden, beispielsweise um Hydrotherapie- oder Aquapressur-Anwendungen zu ermöglichen. Wenn beispielsweise eine Mehrzahl von Wasser-Austrittsdüsen übereinander angeordnet ist, können beispielsweise einzelne Wasserdüsen aktiviert werden, um bestimmte Körperregionen mit den Wasserstrahlen zu erreichen, um z.B. eine Nackenmassage zu ermöglichen.

Die in eine Duschwand integrierbaren technischen Elemente können als Beleuchtungseinrichtungen oder Audioausgabegeräte ausgestaltet sein, um beispielsweise einen Duschkomfort zu erhöhen. Zudem können in die Duschwand nicht nur technische, sondern auch funktionale Elemente integriert sein, z.B. Nischen, die als Ablageraum beispielsweise für Seifen fungieren können.

Die in eine Duschwand integrierbaren technischen Elemente können in einer Ausgestaltung Magnete sein, so dass eine magnetische Halterung von Gegenständen an der Duschwand ermöglicht wird. Auch dabei kann eine zumindest bündige und ggf. unterbrechungslose Oberfläche der Duschwand ermöglicht werden, so dass anders als bei der Verwendung von Haken, Ablagen oder Nischen eine möglichst einfache und gründliche sowie gleichzeitig zeitsparende Reinigung der Dusche unterstützt wird und beispielsweise auch stehende Flächen vermieden werden können. Beispielsweise könnte auch eine Handbrause magnetisch an der Duschwand gehalten sein, so dass sie in unterschiedlichen Höhen bzw. Ausrichtungen an der Duschwand gehalten werden kann und die ansonsten übliche Duschstange entfallen kann.

Die Duschwand kann daher zusammen mit der Duscharmatur und ggf. auch mitsamt der Armaturenleitung ein gemeinsam handhabbares Modul bilden, welches innerhalb kurzer Zeit installiert und zu Revisionszwecken auch wieder demontiert werden kann. Beispielsweise kann die Montage eines solchen Moduls mithilfe lösbarer Halteelemente erfolgen, z.B. durch Verschraubungen, Rastverbindungen oder dergleichen. Die Abdichtung des Moduls gegenüber benachbarten Boden- und/oder Wandelementen oder auch gegenüber dem erwähnten Rahmen der Dusche kann entweder mithilfe von Dichtungselementen erfolgen, beispielsweise Schaumprofilen oder Hohlkammer-Elastomerprofilen, die dauerhaft verwendet werden können, auch nach einer Revision, oder es können sogenannte Silikonfugen zur Abdichtung verwendet werden, die nach einer Demontage des Moduls mit geringem Aufwand neu gezogen werden können.

Wenn die Abdichtung des Moduls gegenüber benachbarten Wandelementen mithilfe von Dichtungselementen erfolgt, können die beiden aneinandergrenzenden Wandelemente aneinander gespannt und das dazwischen befindliche Dichtungselement gepresst werden, so dass es zuverlässig dicht den beiden benachbarten Wandelementen anliegt. Beispielsweise kann eine Gewindestange sich parallel zu dessen beiden Hauptflächen durch ein Wandelement erstrecken und an das andere Wandelement anschließen, so dass von einer Schmalseite des ersten Wandelements aus die Gewindestange betätigt werden kann und die beiden Wandelemente zueinander gespannt werden können. Mittels einer Abdeckleiste kann die Schmalseite des ersten Wandelements und damit auch das Betätigungsende der Gewindestange abgedeckt sein. Oder die Gewindestange kann auf der Außenseite hinter dem ersten Wandelement verlaufen, so dass mittels einer entsprechend breiten Abdeckleiste ebenfalls die Schmalseite des ersten Wandelements und auch das Betätigungsende der Gewindestange abgedeckt sein kann.

Aufgrund der problemlosen Revisionsmöglichkeit kann die Duscharmatur preisgünstiger als bislang üblich ausgestaltet werden, wenn die Duscharmatur an einer entfernbaren Duschwand montiert ist. Beispielsweise können andere Werkstoffe zum Einsatz kommen, z.B. Kunststoffe anstelle von metallischen oder keramischen Werkstoffen. Insbesondere bei Anwendungen, bei denen aufgrund häufiger Modernisierungen ohnehin eine begrenzte Lebensdauer der Duscharmatur vorgesehen ist, beispielsweise bei gewerblichen Anwendungen wie Hotels und dergleichen, kann daher eine wirtschaftlich vorteilhafte, lebensdauergerechte Ausgestaltung der Duscharmatur vorgesehen sein.

Der Betätigungsgriff der Duscharmatur hingegen kann vorteilhaft aus Metall bestehen, so dass den Personen, welche die Dusche und die Duscharmatur benutzen, die vertraute Haptik bei der Betätigung der Duscharmatur vermittelt werden kann.

Die Errichtung einer vorschlagsgemäß ausgestalteten Dusche in einem Badezimmer kann auf unterschiedliche Art und Weise erfolgen:
Bei einem Neubau kann die Dusche praktisch unmittelbar - bis auf den erforderlichen Schallschutz - auf einer Geschossdecke aufgestellt werden. Die Dusche wird dann vom Estrich umgeben, so dass eine bodengleiche Dusche geschaffen werden kann, die Bodenfläche der Dusche also höhengleich an den umgebenden Boden des Badezimmers anschließen kann.

Bei einer Renovierung eines Badezimmers hingegen kann die Dusche auf den vorhandenen Estrich gestellt werden, so dass dann der Zugang zu der Dusche beispielsweise mittels einer Stufe erfolgt. **In** vielen Fällen wird jedoch auch bei einer Renovierung eines Badezimmers der alte Estrich entfernt, um nach jahrzehntelanger Nutzung die im Estrich verlaufenden Leitungen prüfen und ggf. renovieren zu können. Außerdem ist in vielen Fällen einer Renovierung die Installation zusätzlicher Zapfstellen oder die Verlegung von Zapfstellen an eine andere Stelle innerhalb des Badezimmers vorgesehen, so dass auch aus diesen Gründen der alte Estrich und auch die alten Leitungen entfernt werden.

Je nachdem, wie viele technischen Einrichtungen unterhalb der Bodenfläche der Dusche installiert werden sollen, um welche technischen Einrichtungen es sich handelt und welche Abmessungen diese aufweisen, kann selbst bei Neuinstallationen bzw. bei Verlegung eines neuen Estrichs vorgesehen sein, die Bodenfläche der Dusche nicht höhengleich an den umgebenden Boden des Badezimmers anschließen zu lassen, sondern eine Stufe im Badezimmer zu schaffen und die Bodenfläche der Dusche entsprechend hoch anzuordnen, um einen Einbauraum unterhalb der Bodenfläche der Dusche bereitzustellen, der die Unterbringung der jeweils gewünschten technischen Einrichtungen ermöglicht.

Der Rahmen kann in einer Ausgestaltung einen schmalen Außenrand aufweisen, dessen Breite so gering bemessen ist, dass sie nicht größer ist als die Stärke einer Haftschicht, die zur Montage einer Wandbekleidung auf einer Wand verwendet wird, z. B. der Stärke einer Mörtel- oder Klebstoffschicht, wie sie als Haftschicht für Wandfliesen, Keramik-, Naturstein- oder Glastafeln verwendet wird. Wenn der Rahmen unmittelbar an die Wand angrenzt, z.B. an ein Mauerwerk, an eine Betonwand, an eine Innenausbauplatte oder dergleichen, schließt an den Außenrand des Rahmens die Haftschicht nach oben an, die auf die Wand aufgetragen wird oder bereits aufgetragen ist. Die Dusche kann dementsprechend eine Wandbekleidung aufweisen, die mittels der Haftschicht an der Wand gehalten wird, und die sich bis in den Rahmen hinein nach unten erstrecken kann, indem sie dachziegelähnlich den Außenrand des Rahmens überlappt. Beispielsweise kann die Wandbekleidung nach unten bis in die Ablaufrinne hineinragen. Abweichend von dem vorliegenden Vorschlag, der unterhalb der Bodenfläche einen Einbauraum für technische Einrichtungen vorsieht sowie ggf., den erwähnten Rahmen, kann jedoch auch vorgesehen sein, bei einer Dusche, deren Boden als herkömmliche Duschwanne oder Duschtasse ausgestaltet ist, die Wandbekleidung bis in diese Duschwanne hinunter verlaufen zu lassen, wenn der äußere Rand der Duschwanne eine dementsprechend geringe Breite aufweist.

Wenn die Haftschicht als sogenanntes Dickbett ausgestaltet ist und eine Wandstärke von bis zu 20 mm aufweisen kann, kann der Außenrand des Rahmens dementsprechend 20 mm oder schmaler sein, um zu ermöglichen, dass die Wandbekleidung dachziegelähnlich den Außenrand des Rahmens übergreift. Vorteilhaft ist der Außenrand jedoch lediglich 10 mm breit oder noch schmaler. Beispielsweise bietet ein 5 mm breiter Außenrand des Rahmens die Möglichkeit, eine Vielzahl unterschiedlicher Wandbeläge zu verwenden, weil diese mit einer entsprechenden Haftschichtdicke auf einer Wand montiert werden können. Gleichzeitig stellt eine Materialstärke von 5 mm auch bei einem aus Kunststoff bestehenden Rahmen eine ausreichend robuste Ausgestaltung des Rahmens dar, um Beschädigungen während des Transports und der Montage des Rahmens auszuschließen. Im späteren Gebrauch der Dusche ist der Außenrand des Rahmens ohnehin verdeckt, beispielsweise durch einen Bodenbelag oder durch die erwähnte Wandbekleidung.

Jedenfalls kann durch die erwähnte überlappende Anordnung der Wandbekleidung eine als Wartungsfuge regelmäßig zu pflegende Dichtungsfuge, z. B. eine Silikonfuge, vermieden werden. Eine Abdichtung zwischen dem Wandbelag und dem Rahmen, z.B. gegen nach oben spritzendes Wasser oder auch gegen aufsteigende kapillare Feuchtigkeit kann durch ein Fugenband sichergestellt werden.

Im Abstand unterhalb von der Oberkante des Außenrandes des Rahmens kann ein Vorsprung nach innen ragen, so dass ein Sockel geschaffen wird. Auf diesen Sockel kann beispielsweise eine Wandbekleidung mit ihrer Unterkante gestellt werden, so dass die Wandbekleidung Dachziegel ähnlich den Außenrand des Rahmens überlappt, mit den oben bereits geschilderten Vorteilen. Der Sockel ermöglicht die Montage einer Wandbekleidung, ohne dass diese mittels einer Haftschicht an der Wand gehalten ist. Dies eignet sich insbesondere für großformatige Wandbekleidungen, beispielsweise für Tafeln, die sich über die gesamte Länge des jeweiligen Außenrandes oder Außenrand-Abschnitts erstrecken, bei einem rechteckigen Rahmen also beispielsweise über gesamte Länge einer Seite des Rahmens. Aber auch bei kleinformatigeren Wandbekleidungselementen wie z.B. Fliesen kann der Sockel vorteilhaft genutzt werden, beispielsweise um die Wandbekleidung während ihrer Montage, beispielsweise während eine Haftschicht abbindet bzw. aushärtet, aber auch später im Gebrauch der Dusche, gegen ein Abrutschen nach unten zu sichern.

Der erwähnte Sockel kann sich entlang der gesamten Länge des Außenrandes erstrecken, der Rahmen kann jedoch auch zwei oder mehr, voneinander beabstandete Sockel entlang des Außenrandes aufweisen. Der erwähnte Sockel kann jedoch nicht nur dazu genutzt werden, eine Wandbekleidung zu stützen. Bei einem rechteckigen Rahmen kann die Dusche an einer, zwei oder drei der vier Seiten an eine Wand grenzen, während an wenigstens einer Seite der Rahmen an den Bodenbelag des jeweiligen Raumes angrenzt, beispielsweise um von dieser Seite her den Zugang in die Dusche zu ermöglichen. Wenn der Bodenbelag niveaugleich an den Boden der Dusche grenzt, beispielsweise um einen barrierefreien Zugang in die Dusche zu ermöglichen, kann sich in der Praxis das Problem ergeben, dass im Laufe der Zeit der Bodenbelag absinkt, beispielsweise weil sich eine Estrichschicht setzt, die auf einem tragenden Betonboden des Raumes, z.B. auf einer aus Beton bestehenden Geschossdecke eines mehrgeschossigen Gebäudes vorhanden ist.

Der Sockel kann dazu genutzt werden, eine elastische Auflagerleiste zu tragen. Diese Auflagerleiste ist an ihrer Oberseite mit einem elastischen Material versehen oder weist eine elastische Schicht bzw. ein elastisches Element auf, so dass sie jedenfalls eine gewisse Verformbarkeit und Nachgiebigkeit bei einem von oben einwirkenden Druck bietet. Der Bodenbelag kann in diesem Fall nicht nur bis an den Rahmen der Dusche heranreichen, sondern bis auf die Auflagerleiste reichen und sich auf dieser abstützen. Sollte sich ein Unterbau des Bodenbelags setzen, beispielsweise der erwähnte Estrich, so kann diese Absenkung zu einem gewissen Anteil durch eine Verformung der Auflagerleiste kompensiert werden, so dass sich auch der Bodenbelag in dem Bereich, der über den Rahmen der Dusche ragt, absenken kann. Senkt sich der Unterbau jedoch noch weiter ab, als dies von der Auflagerleiste kompensiert werden kann, so führt dies zu einer geringfügigen Schrägstellung des Bodenbelags, nicht jedoch zu einem hinderlichen Absatz zwischen der Dusche und dem umgebenden Bodenbelag.

Eine Dichtung unterhalb der Bodenfläche kann grundsätzlich als Rundschnur ausgestaltet sein, so dass handelsübliches Halbzeug als Dichtung verwendet werden kann. In einer Ausgestaltung kann allerdings auch vorgesehen sein, dass die Dichtung als Profildichtung ausgestaltet ist, also einen vom Kreisrund abweichenden Querschnitt aufweist. Auf diese Weise kann besonders zuverlässig sichergestellt werden, dass die Dichtung ihre Position beibehält, wenn die Bodenfläche in ihre Wartungsstellung hoch geschwenkt wird. Im Unterschied zu einer Rundschnur ist während der Montage der Dichtung für eine Profildichtung weitestgehend ausgeschlossen, dass diese um ihre Längsachse verdrillt wird. Dementsprechend steht die als Profildichtung ausgestaltet Dichtung nicht unter einer aus dem Verdrillen resultierenden Torsionsspannung. Wenn später die Dichtung entlastet wird, indem die Bodenfläche angehoben wird und die Dichtung nicht mehr zwischen dem Rahmen und der Bodenfläche komprimiert ist, ist die als Profildichtung ausgestaltet Dichtung dementsprechend nicht bestrebt, einer Torsionsspannung nachzugeben und sich zu "entdrillen", was dazu führen könnte, dass die Dichtung ihre Position innerhalb einer Nut des Rahmens verlassen würde.

Außerdem bietet die Ausgestaltung als Profildichtung die Möglichkeit einer besonders zuverlässigen Abdichtung, indem dort, wo die Dichtung dem gegenüberliegenden Bauteil anlegt, die Dichtung eine besonders dichtungswirksame Geometrie aufweisen kann, beispielsweise mehrere parallel zueinander und in Längsrichtung der Dichtung verlaufende Rippen.

Ausführungsbeispiele der Erfindung werden anhand der rein schematischen Darstellungen nachfolgend näher erläutert. Dabei zeigt
- Fig. 1: eine perspektivische Ansicht in auseinandergezogener Darstellung auf einen unteren Bereich eines ersten Ausführungsbeispiels einer Dusche, mit einem Rahmen und einer vom Rahmen getragenen, schwenkbaren Bodenfläche der Dusche,
- Fig. 2 bis 5: perspektivische, noch weiter vereinfachte schematische Ansichten aus unterschiedlichen Blickrichtungen auf ein zweites Ausführungsbeispiel einer Dusche, wobei die Bodenfläche der Dusche in unterschiedliche Stellungen geschwenkt ist,
- Fig. 6 und 7: perspektivische, schematische Ansichten auf einen Querschnitt durch ein weiteres Ausführungsbeispiel eines Rahmens und zwei unterschiedliche Ausführungsbeispiele von Duschen, und
- Fig. 8 und 9: perspektivische Ansichten auf ein weiteres Ausführungsbeispiel eines Rahmens samt Bodenfläche.

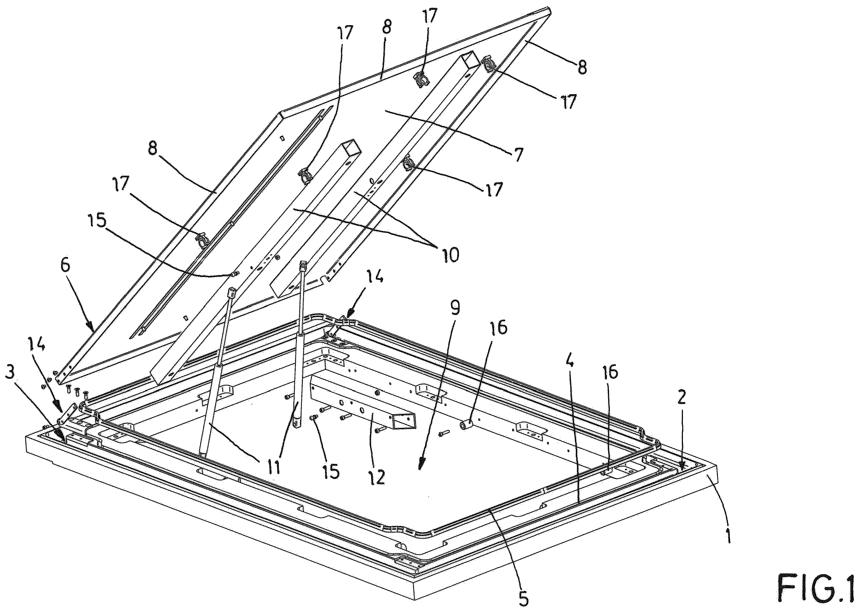

In Fig. 1 ist eine Bodenkonstruktion eine Dusche dargestellt, wobei diese Bodenkonstruktion einen Rahmen 1 aufweist, der als geschlossener, umlaufender Ring ausgestaltet und liegend ausgerichtet ist. An seiner Oberseite ist der Rahmen 1 mit zwei ringförmig umlaufenden Vertiefungen versehen: eine erste, radial äußere und vergleichsweise tiefe Vertiefung bildet eine Ablaufrinne 2, welche das verbrauchte Duschwasser aufnimmt und zu einer Abflussöffnung 3 führt, die in Fig. 1 nicht ersichtlich sondern lediglich durch einen Pfeil gekennzeichnet ist. Die Abflussöffnung 3 kann an die Ablaufrinnen 2 nach unten führend anschließen, bei dem dargestellten Ausführungsbeispiel ist jedoch vorgesehen, dass die Abflussöffnung 3 das Wasser radial nach innen in den vom Rahmen 1 umschlossenen Innenraum führt, wo es dann in eine Abflussleitung gelangt. Im Übergang vom Rahmen 1 zur Abflussleitung wird ein Geruchsverschluss in Form eines Siphons ausgebildet, was durch die Bauhöhe des Rahmens 1 möglich ist, die bei dem dargestellten Ausführungsbeispiel 5 cm beträgt.

Radial innerhalb von der Ablaufrinne 2 verläuft eine zweite, vergleichsweise flachere Rinne als Dichtungsrinne 4, in welche eine Dichtung 5 eingelegt ist, die als geschlossener, um laufender Ring verläuft. Bei dem dargestellten Ausführungsbeispiel ist die Dichtung 5 als Silikon-Rundschnur ausgestaltet, deren beiden Enden miteinander verklebt sind.

Am Rahmen 1 ist eine Bodenfläche 6 der Dusche schwenkbeweglich gelagert. Bei dem dargestellten Ausführungsbeispiel ist vorgesehen, dass die Bodenfläche 6 aus mehreren Schichten gebildet und sandwichartig aufgebaut wird, wobei in Fig. 1 lediglich die untere Schicht als sogenannte Stützschicht 7 dargestellt ist. Auf dieser Stützschicht 7 wird eine obere Dekorschicht 18 befestigt, die beispielsweise in Form einer oder mehrerer Natursteinplatten, Fliesen oder dergleichen ausgestaltet sein kann. Um die wasserdichte Ausgestaltung der Bodenfläche 6 nicht zu gefährden, ist bei dem dargestellten Ausführungsbeispiel vorgesehen, die Dekorschicht 18 nicht mithilfe von Schrauben, Nieten oder ähnlichen Befestigungselementen an der Stützschicht 7 zu befestigen. Dementsprechend sind in Fig. 1 keine Durchbrechungen der Stützschicht 7 erkennbar, die zur Durchführung derartiger Befestigungselemente dienen würden.

Vielmehr ist vorgesehen, eine Dekorschicht 18 mit der Stützschicht 7 zu verkleben. Die Verklebung kann in einer Ausgestaltung vollflächig erfolgen, so dass der Klebstoff einerseits die Dekorschicht 18 an der Stützschicht 7 hält und andererseits auch einen Schallschutz bietet in und beispielsweise Geräusche zu vermeiden hilft, die ansonsten ggf. bei einem direkten Kontakt der Dekorschicht 18 mit der Stützschicht 7 auftreten könnten. In einer anderen Ausgestaltung kann eine punktuelle Verklebung an mehreren Stellen vorgesehen sein, wobei dann zwischen den einzelnen Klebestellen zusätzliche Dämpfungselemente zwischen der Dekorschicht 18 und der Stützschicht 7 montiert werden können, beispielsweise dünne Elastomerplättchen von etwa 1 mm Höhe, um den gewünschten Schallschutz zu erreichen und einen direkten Kontakt der Dekorschicht 18 mit der Stützschicht 7 zu vermeiden. Die Stützschicht 7 ist in Form einer Metallplatte ausgestaltet, die rechteckig zugeschnitten ist und an ihren vier Rändern jeweils nach unten abgekantet ist. In den Ecken schließen die Abkantungen wasserdicht aneinander an, so dass eine geschlossene, umlaufende Tropfkante 8 gebildet wird. Wasser, welches von oben auf die Bodenfläche 6 auftrifft, fließt radial nach außen und an den vier umlaufenden Rändern der Bodenfläche 6 nach unten. Es gelangt an die Tropfkante 8 der Stützschicht 7 und von dort in die Ablaufrinne 2. Die Dichtung 5 stellt daher lediglich eine zusätzliche Sicherungsmaßnahme dar, um zuverlässig den Eintritt von Wasser in den von der Dichtung 5 umschlossenen Raum zu verhindern, beispielsweise im Falle von Spritzwasser oder falls sich in der Ablaufrinne 2 ein Rückstau von Wasser ergeben sollte. Der von der Dichtung 5 umschlossenen Raum, insbesondere der vom Rahmen 1 umschlossenen Raum, wird nachfolgend als Einbauraum 9 bezeichnet, da er für den Einbau von technischen Einrichtungen genutzt werden kann.

Die metallische Stützschicht 7 ist zugunsten eines möglichst geringen Gewichts mit einer vergleichsweise geringen Materialstärke ausgeführt. Zur Vermeidung von unerwünscht starken Durchbiegungen sind an ihrer Unterseite Verstärkungsprofile 10 angeordnet, die bei dem dargestellten Ausführungsbeispiel als metallische Vierkant-Hohlprofile ausgestaltet sind. Die Befestigung der Verstärkungsprofile 10 an der Unterseite der Stützschicht 7 erfolgt ebenfalls ohne Durchbrechungen der Stützschicht 7. Beispielsweise können die Verstärkungsprofile 10 an die metallische Stützschicht 7 gelötet oder geschweißt werden. Bei dem dargestellten Ausführungsbeispiel ist vorgesehen, die Verstärkungsprofile 10 mit der metallischen Stützschicht 7 zu verkleben. Dies stellt einerseits eine zuverlässig dauerhafte Verbindung sicher und unterstützt andererseits auch die Schallschutzmaßnahmen durch eine akustische Entkopplung der Bodenfläche 6.

In Fig. 1 ist die Bodenfläche 6 in einer angehobenen, nach oben geschwenkten Stellung relativ zu dem Rahmen 1 dargestellt. Diese Bewegung wird kraftunterstützt durchgeführt. Hierzu sind zwei Gasdruckfedern 11 vorgesehen, die nicht unmittelbar an den Rahmen 1 anschließen, sondern über Montageprofile 12, so dass die in den Rahmen 1 eingeleiteten Kräfte über eine größere Fläche verteilt werden.

Die Bodenfläche 6 kann eine liegende Gebrauchsstellung einnehmen, in welcher die metallische Stützschicht 7 auf der Dichtung 5 aufliegt und die Tropfkante 8 über der Ablaufrinne 2 verläuft. Wenn die Bodenfläche 6 aus einer angehobenen Stellung, beispielsweise wie in Fig. 1 ersichtlich, in die Gebrauchsstellung abgesenkt wird, werden die Gasdruckfedern 11 gespannt und dienen als Kraftspeicher, welche die nächste Aufwärts-Schwenkbewegung der Bodenfläche 6 unterstützen. Die Schwenkbewegung der Bodenfläche 6 erfolgt dabei mittels zweier Scharniere 14.

In Fig. 1 sind verschiedene Befestigungsschrauben dargestellt, die zur Verbindung der verschiedenen Bauteile vorgesehen sind. Kugelzapfen 15 sind dort vorgesehen, wo die Gasdruckfedern 11 gelenkig an die Verstärkungsprofile 10 und die Montageprofile 12 anschließen. Weiterhin sind Rastbolzen 16 an der radial nach innen weisenden Seite des Rahmens 1 angeordnet. Die Rastbolzen 16 dienen dazu, die Bodenfläche 6 zuverlässig in ihrer abgesenkten Gebrauchsstellung zu halten. Hierzu dienen federelastische Klammern 17 an der Unterseite der Bodenfläche 6.

Die Klammem 17 weisen jeweils einen etwa Omega-förmigen Querschnitt auf, so dass sie die Rastbolzen 16 klemmend umgreifen, wenn die Bodenfläche 6 in ihre Gebrauchsstellung abgesenkt ist. Die Klammem 17 bestehen aus Kunststoff, während die Rastbolzen 16 aus Metall bestehen. Zur Überwindung des Rastwiderstandes kann die Bodenfläche 6 mithilfe eines Vakuum-Saugers angehoben werden.

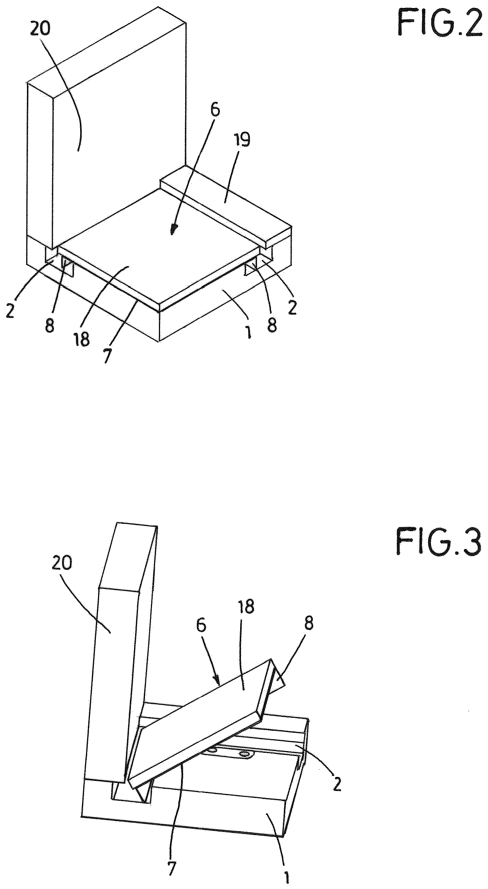

Fig. 2 zeigt eine perspektivische Ansicht von oben auf einen Ausschnitt aus einem zweiten Ausführungsbeispiel einer Dusche im Bereich einer Ecke der Bodenfläche 6. In Fig. 2 befindet sich die Bodenfläche 6 in ihrer abgesenkten Gebrauchsstellung. Die Darstellung ist im Vergleich zu Fig. 1 noch weiter schematisiert, beispielsweise ist der Rahmen 1 ohne Details wie die Profilierung an seiner Oberseite dargestellt, und es fehlen Befestigungselemente, Verstärkungs- und Montageprofile sowie die Kraftunterstützungsmittel, die motorisch oder als Kraftspeicher ausgestaltet sein können. Weiterhin ist der Rahmen 1 breiter ausgeführt als bei dem Ausführungsbeispiel der Fig. 1, so dass der von dem Rahmen 1 umgebene Einbauraum 9 in Fig. 2 nicht ersichtlich ist. Von der Bodenfläche 6 ist nicht nur die Stützschicht 7 mit der Tropfkante 8 dargestellt, sondern auch eine auf der Stützschicht 7 befestigte obere Dekorschicht 18.

Weiterhin ist aus Fig. 2 ersichtlich, dass die Oberfläche der Bodenfläche 6 höhengleich mit einem Rand 19 verläuft. Der Rand 19 kann beispielsweise aus dem gleichen Material bestehen wie die Dekorschicht 18 der Bodenfläche 6, so dass lediglich eine schmale Fuge, die oberhalb der Ablaufrinne 2 zwischen dem Rand 19 und der Bodenfläche 6 verläuft, den Wasserablauf der Dusche markiert.

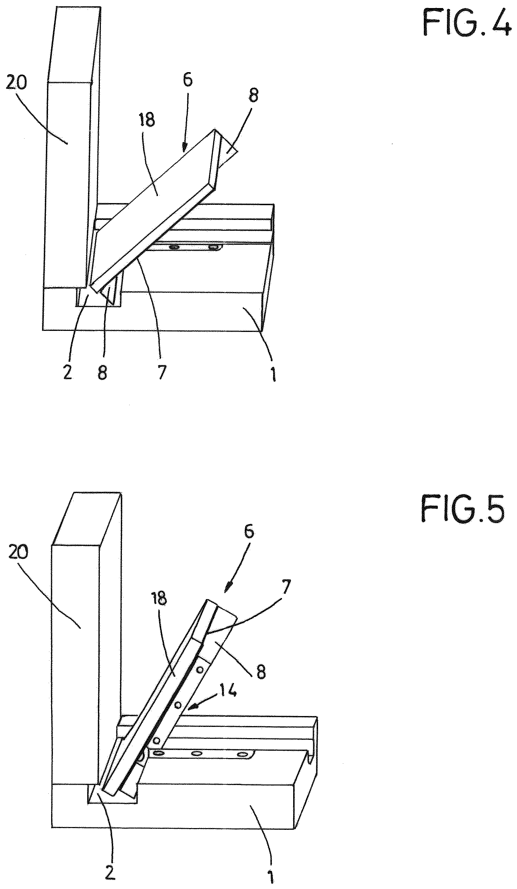

Schließlich ist in Fig. 2 auch eine Duschwand 20 dargestellt, die bei dem dargestellten Ausführungsbeispiel auf dem Rahmen 1 steht. Die Duschwand 20 stellt dementsprechend keinen festen Bestandteil eines Gebäudes dar, beispielsweise in Form einer gemauerten Wand, sondern vielmehr einen Bestandteil der Dusche. Die Duschwand 20 kann mit einer Duscharmatur versehen sein, wobei sich eine Armaturenleitung von der Duscharmatur aus nach unten bis in den Einbauraum 9 erstreckt und dort mittels einer Schnellkupplung an eine Wasserleitung angeschlossen ist. Daher kann die Duschwand 20 mitsamt der Duscharmatur und der Armaturenleitung als komplettes Modul montiert werden, wodurch die Installation der Dusche in vergleichsweise kurzer Zeit möglich ist, oder die Duschwand 20 kann später, nachdem die Schnellkupplung gelöst ist, ausgewechselt werden. Die Fig. 3 bis 5 zeigen schrittweise, wie die Bodenfläche 6 der Dusche aus ihrer Gebrauchsstellung in eine aus Fig. 5 ersichtliche Wartungsstellung aufwärts geschwenkt wird. Bei dem dargestellten Ausführungsbeispiel wird die Wartungsstellung erreicht, wenn der maximale Schwenkwinkel der Bodenfläche 6 erreicht ist. **In** diesem Fall gerät der Abschnitt der Tropfkante 8, welcher nahe und parallel zur Schwenkachse verläuft, gegen ein Ufer der Ablaufrinne 2. Die Bodenfläche 6 steht dann in einem Winkel von 60° offen, so dass der vom Rahmen 1 umgebene Einbauraum 9 und die darin befindlichen technischen Einrichtungen gut zugänglich sind.

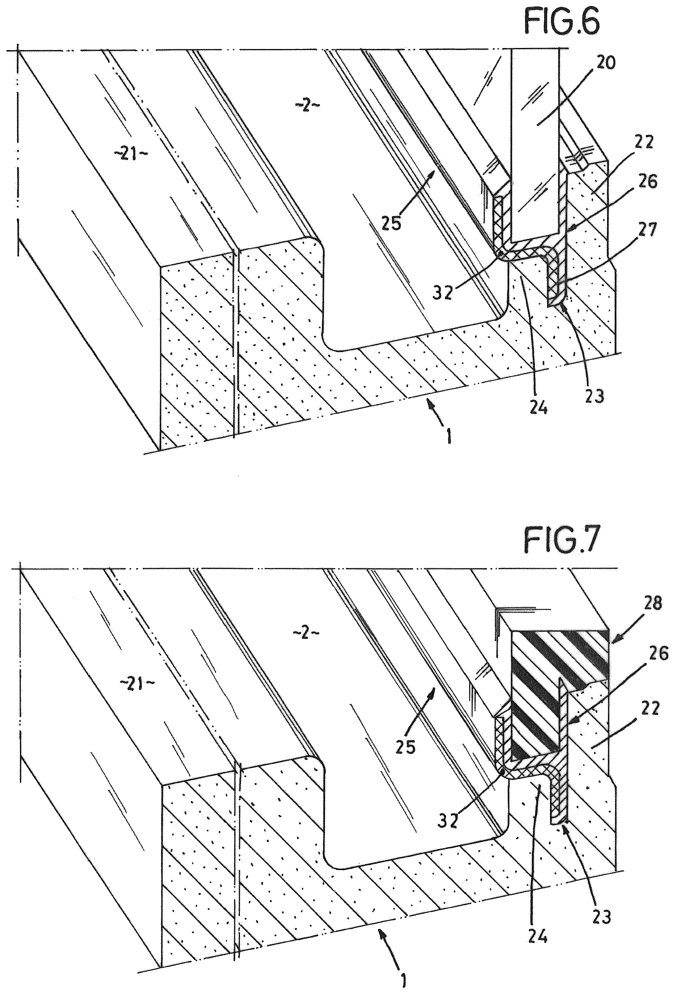

Fig. 6 zeigt ausschnittsweise und schematisch vereinfacht ein weiteres Ausführungsbeispiel eines Rahmens 1. Radial innerhalb - in Fig. 6 links - von der Ablaufrinne 2 weist der Rahmen 1 einen Innenrand 21 auf, der oben von der Bodenfläche 6 abgedeckt wird und auf dem sich die Bodenfläche 6 abstützen kann, beispielsweise über eine Dichtung 5, so dass in diesem Fall der Innenrand 21 eine Dichtungsrinne 4 aufweist. Auch kann am Innenrand 21 der das Scharnier 14 aufweisende Schwenkbeschlag der Bodenfläche 6 montiert sein. Aufgrund der vereinfachten, schematischen Fig. 6 sind derartige Elemente des Rahmens 1 nicht dargestellt. Vielmehr wird anhand von Fig. 6 die Ausgestaltung eines Außenrandes 22 erläutert, der radial außerhalb - in Fig. 6 rechts - von der Ablaufrinne 2 verläuft:
Der Außenrand 22 ist schmal bemessen und weist bei dem dargestellten Ausführungsbeispiel eine Breite von lediglich 5 mm auf. An den Außenrand 22 schließt radial nach innen zunächst eine Nut 23 an, und radial noch weiter nach innen, zwischen der Nut 23 und der Ablaufrinne 2, verläuft eine Sockelleiste 24 in einer niedrigeren Ebene als die Oberkante des Außenrandes 22.

Ein Halteprofil 25 weist einen nach oben offenen, U-förmigen Aufnahmeabschnitt 26 und eine daran nach unten anschließende Einsteckfahne 27 auf und ist dementsprechend im Querschnitt insgesamt h-förmig ausgestaltet. Mit der Einsteckfahne 27 ist das Halteprofil 25 in die Nut 23 eingesteckt, so dass der Aufnahmeabschnitt 26 auf der Sockelleiste 24 abgestützt ist. Das Halteprofil 25 ist zweiteilig ausgestaltet und besteht einerseits aus einem Elastomerprofil mit dem beschriebenen h-förmigen Querschnitt und andererseits aus einem metallischen Stützprofil 32 mit annähernd S-förmigem Querschnitt.

In dem Aufnahmeabschnitt 26 ist der untere Rand einer Duschwand 20 aufgenommen, so dass diese den Außenrand 22 dachziegelartig überlappt. Aufgrund der geringen Breite des Außenrandes 22 und wenn der Rahmen 1 dicht an eine Wand gerückt ist, kann die Duschwand durch Klebepads oder dergleichen an der Wand gehalten und gegen Kippbewegungen gesichert werden. Die Wand muss in diesem Fall keine tragende Funktion für die Duschwand 20 erfüllen, da das Eigengewicht der Duschwand vom Rahmen 1, insbesondere dem Halteprofil 25 und der Sockelleiste 24 aufgenommen wird.

Während das Elastomerprofil des Halteprofils 25 die Duschwand 20 aufnimmt und als Dämpfungselement gegen Stöße und lokale Druckspitzen wirkt sowie als Dichtung dient, schützt das Stützprofil 32 das Elastomerprofil gegen unerwünschte Verformungen und stellt die gewünschte Dichtungswirkung des Elastomerprofils sicher, weiterhin stellt es sicher, dass die Duschwand 20 ihre Position beibehält.

Die Duschwand 20 ist als großformatige Tafel ausgestaltet und kann z. B. aus Glas, Naturstein, Keramik, Kunststoff oder einem wasserfest ertüchtigten Holz bzw. Holzwerkstoff bestehen. Abweichend von dem dargestellten Ausführungsbeispiel kann die Duschwand 20 nicht als eine großformatige Tafel, sondern als anderer Wandbelag, z. B. als geflieste Fläche ausgestaltet sein, wobei das Kleber- oder Mörtelbett der Fliesen die Breite des Außenrandes 22 von einer tragenden Wandkonstruktion, z. B. einem Mauerwerk oder einen Innenausbauwand, bis zu dem Wandbelag überbrückt.

Fig. 7 zeigt eine Ansicht ähnlich Fig. 6. Beispielsweise kann derselbe, rechteckig verlaufende Rahmen 1 dargestellt sein, wobei Fig. 6 eine Seite des Rahmens 1 zeigt, wo die Dusche an eine Wand anschließt, während in Fig. 7 eine Seite des Rahmens 1 gezeigt ist, wo die Dusche an einen Fußboden anschließt und wo sich z. B. ein barrierefreier Eingang der Dusche befindet. Es wird das gleiche Halteprofil 25 verwendet wie zur Wand hin. Allerdings ist in den Aufnahmeabschnitt 26 keine Tafel eingestellt, sonders es dient zur Aufnahme eines Kunststoffprofils 28, das einen im Wesentlichen L-förmigen Querschnitt aufweist und einerseits in den Aufnahmeabschnitt 26 eingesteckt ist und andererseits auf dem Außenrand 22 aufliegt.

Üblicherweise wird bei herkömmlichen Duschen zur Schaffung eines barrierefreien Eingangs ein Bodenbelag bis an den äußeren Rand der Dusche verlegt, z. B. bis an eine Duschtasse oder Duschwanne. Im Unterschied dazu kann bei einer Ausgestaltung nach Fig. 7 der Bodenbelag bis auf die Dusche verlegt werden, nämlich in der Art, dass er auf dem Kunststoffprofil 28 aufliegt. Das Kunststoffprofil 28 ist so hart, dass es - anders als ein weiches Gummi- oder Schaumstoffprofil - nicht wesentlich nachgibt, wenn es durch das Gewicht einer Person belastet wird, die sich auf dem Bodenbelag über dem Kunststoffprofil 28 befindet. Das Kunststoffprofil kann z. B. aus Polyethylen oder Polyamid bestehen. Sollte sich ein Unterbau unter dem Bodenbelag, beispielsweise ein Estrich, im Laufe der Zeit setzen, wie dies in der Praxis manchmal zu beobachten ist, so entsteht eine sehr flache Rampe, die der Bodenbelag bildet und die vom Kunststoffprofil 28 bis zu dem abgesenkten Niveau des Estrichs abfällt.

Durch diesen schrägen, rampenartigen Verlauf des Bodenbelags wird eine Stolperkante vermieden, die ansonsten entstehen würde, wenn der Bodenbelag lediglich bis an den Rahmen 1 heranreichen würde und sich gemeinsam mit dem Estrich absenken würde, während der Rahmen 1 auf seinem bisherigen Niveau verbleiben würde, weil er nicht auf dem Estrich, sondern direkt auf einer Geschossdecke eines Gebäudes steht. Je nachdem, welche Schichtdicke ein dekorativer Belag aufweist, der als Bestandteil der mehrschichtigen Bodenfläche 6 der Dusche vorgesehen ist, kann ein niveau-gleicher Übergang von dem an die Dusche grenzenden Bodenbelag auf die Bodenfläche 6 erreicht werden, unterbrochen lediglich von einem Spalt, der oberhalb der Ablaufrinne 2 verläuft und durch den das Duschwasser von der Bodenfläche 6 abläuft.

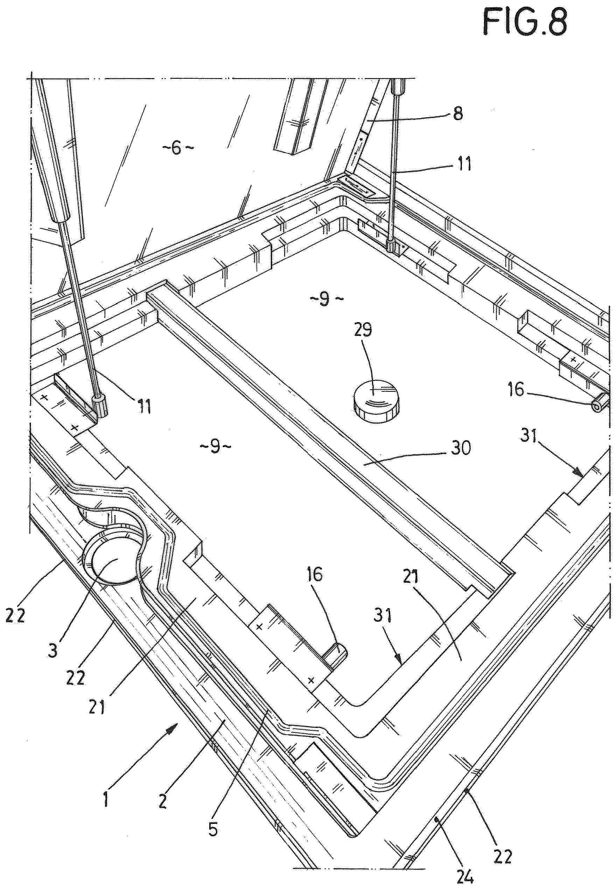

Fig. 8 zeigt eine perspektivische Ansicht auf einen Rahmen 1 ähnlich der Ansicht von Fig. 1, wobei die Bestandteile der Bodenkonstruktion der Dusche jedoch nicht auseinandergezogen, sondern im montierten Zustand dargestellt sein. Bei dem Ausführungsbeispiel der Fig. 8 ist in den Innenrand 21 eine Dichtung 5 eingelegt, die als geschlossener Ring rings um einen Einbauraum 9 verläuft. Innerhalb des Rahmens 1 bildet der Einbauraum 9 eine Öffnung, durch die der Blick auf den Untergrund fällt, auf dem der Rahmen 1 aufgestellt ist, dies kann z. B. eine Betonschicht einer Geschossdecke sein oder ein Estrich oder dergleichen. Innerhalb des Einbauraums 9 ist ein Wassermelder 29 als technische Einrichtung vor Duschwasser geschützt angeordnet.

Von der mehrschichtigen Bodenfläche 6 ist die unterste Schicht erkennbar, die bei dem dargestellten Ausführungsbeispiel als Platte aus rostfreiem Edelstahl ausgestaltet ist. Die Platte ist an ihren vier Seiten nach unten abgekantet, so dass die Bodenfläche 6 ringsum eine Tropfkante 8 aufweist. Gasdruckfedern 11 halten die Bodenfläche 6 in ihrer angehobenen Wartungsstellung. Eine Stütze 30 dient dazu, die Bodenfläche 6 gegen Durchbiegung bei Belastung zu unterstützen, wenn sich die Bodenfläche 6 in ihrer abgesenkten Gebrauchsstellung befindet. Die Stütze 30 liegt als liegend angeordnete Traverse an zwei gegenüberliegenden Seiten auf dem Innenrand 21 des Rahmens 1 auf. Der Innenrand 21 weist zur Aufnahme der Stütze 30 abgesenkte Stufen 31 auf, so dass die Stütze 30 ausreichend tief angeordnet ist und sichergestellt ist, dass die Bodenfläche 6 in ihrer abgesenkten Gebrauchsstellung mit ihrer Unterseite der Dichtung 5 anliegt. Mehrere Stufen 31 sind auf derselben Seite des Rahmens 1 angeordnet, und jede Stufe 31 ist breiter als die Stütze 30, so dass die Position der Stütze 30 in Anpassung daran gewählt werden kann, welche technischen Einrichtungen in dem Einbauraum 9 aufgenommen werden sollen und wo diese innerhalb des Einbauraums 9 angeordnet werden sollen.

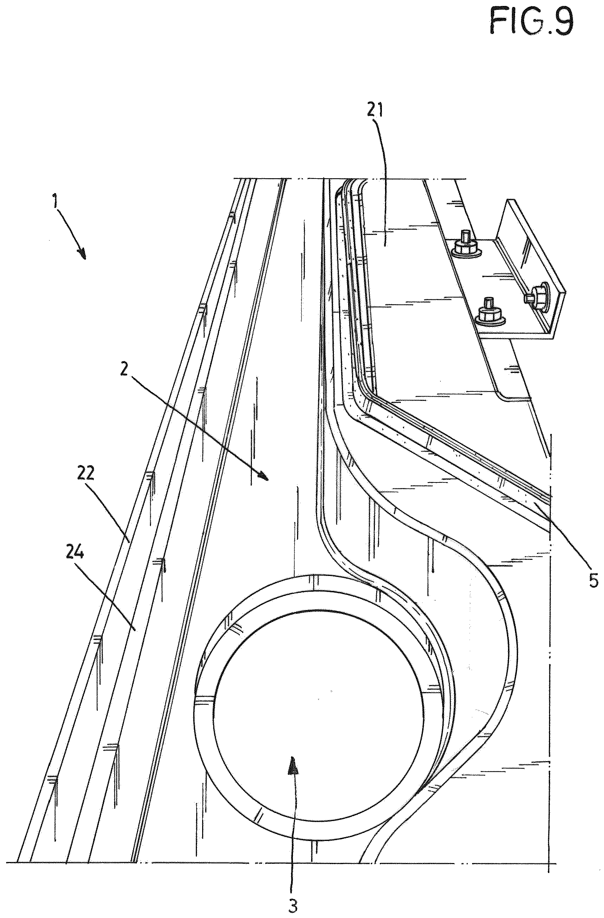

Fig. 9 zeig aus einem anderen Blickwinkel und in einem größeren Maßstab als Fig. 8 einen Ausschnitt aus dem Rahmen 1 der Fig. 8 im Bereich der Abflussöffnung 3. Die schmale Ausgestaltung des Außenrandes 22 ist erkennbar sowie die an den Außenrand anschließende Sockelleiste 24, und weiterhin ist erkennbar, dass bei dem Ausführungsbeispiel der Fig. 8 und 9 die Dichtung 5 nicht als Rundschnur, sondern als Profildichtung ausgestaltet ist.

### Bezugszeichen

- 1: Rahmen
- 2: Ablaufrinne
- 3: Abflussöffnung
- 4: Dichtungsrinne
- 5: Dichtung
- 6: Bodenfläche
- 7: Stützschicht
- 8: Tropfkante
- 9: Einbauraum
- 10: Verstärkungsprofil
- 11: Gasdruckfeder
- 12: Montageprofil
- 14: Scharnier
- 15: Kugelzapfen
- 16: Rastbolzen
- 17: Klammer
- 18: Dekorschicht
- 19: Rand
- 20: Duschwand
- 21: Innenrand
- 22: Außenrand
- 23: Nut
- 24: Sockelleiste
- 25: Halteprofil
- 26: Aufnahmeabschnitt
- 27: Einsteckfahne
- 28: Kunststoffprofil
- 29: Wassermelder
- 30: Stütze
- 31: Stufe
- 32: Stützprofil

## Patentansprüche

1. Dusche, mit einer Bodenfläche (6), einem die Bodenfläche (6) umgebenden Rand (19), und mit einer Abflussöffnung (3), die dazu bestimmt ist, von der Bodenfläche (6) abfließendes Wasser abzuführen, wobei die Bodenfläche (6) beweglich gelagert ist zwischen einer liegenden Gebrauchsstellung und einer Wartungsstellung,
wobei unterhalb der Bodenfläche (6) ein Einbauraum (9) angeordnet ist, der dazu bestimmt ist, technische Einrichtungen aufzunehmen, wobei die die Bodenfläche (6) oberhalb des Einbauraums (9) in der Art gehalten ist, dass sie in ihrer Wartungsstellung einen Zugang zu dem Einbauraum (9) und den darin befindlichen technischen Einrichtungen ermöglicht,
**dadurch gekennzeichnet,**
**dass** die Bodenfläche (6) über Wägezellen abgestützt ist, derart, dass eine Gewichtsbelastung der Bodenfläche (6) erfassbar ist, und dass den Wägezellen eine Auswerte- und Steuerungselektronik zugeordnet ist, die dazu ausgestaltet und bestimmt ist, die sich auf Grund der Gewichtsbelastung einer sich in der Dusche aufhaltenden Person erfassten Gewichtsdaten drahtlos auszusenden und ein den Gewichtsdaten dieser Person zugeordnetes und hinterlegtes Duschprofil abzurufen, und dass die Dusche mehrere Austrittsdüsen für das Duschwasser aufweist, und dass die Austrittsdüsen mit elektrisch betätigbaren Ventilen wahlweise zu öffnen oder zu schließen sind, und dass die den Wägezellen zugeordnete Auswerte- und Steuerungselektronik dazu ausgestaltet und bestimmt ist, gemäß dem Duschprofil unterschiedliche Austrittsdüsen zu öffnen.

2. Dusche nach Anspruch 1, **dadurch gekennzeichnet, dass** die Bodenfläche (6) kraftunterstützt beweglich ist.

3. Dusche nach Anspruch 1 oder 2, **dadurch gekennzeichnet, dass** die Bodenfläche (6) schwenkbar gelagert ist.

4. Dusche nach einem der vorhergehenden Ansprüche, **dadurch gekennzeichnet, dass** unterhalb der Bodenfläche (6) eine Dichtung (5) als geschlossen umlaufender Ring angeordnet ist, wobei die Unterseite der Bodenfläche (6) der Dichtung (5) dicht anliegt, vorzugsweise, dass radial innerhalb der ringförmig verlaufenden Dichtung (5) eine Quellschnur angeordnet ist, welche der Unterseite der Bodenfläche (6) anliegt.

5. Dusche nach einem der vorhergehenden Ansprüche, **dadurch gekennzeichnet, dass** die Unterseite der Bodenfläche (6) eine Tropfkante (8) bildet, die außerhalb des Einbauraums (9) verläuft.

6. Dusche nach einem der vorhergehenden Ansprüche, **gekennzeichnet durch** einen Rahmen (1), der dazu bestimmt ist, auf den Boden des Raumes aufgestellt oder aufgelegt zu werden, und der eine Ablaufrinne (2) aufweist, wobei die Abflussöffnung (3) an die Ablaufrinne (2) anschließt, und der einen, insbesondere als Schwenkbeschlag ausgestalteten, Beschlag trägt, an welchem die Bodenfläche (6) befestigt ist, wobei die Bodenfläche (6) in ihrer liegenden Gebrauchsstellung auf dem Rahmen abgestützt ist, vorzugsweise, dass die Abflussöffnung (3) zur Seite und radial nach innen in den vom Rahmen (1) umschlossenen Einbauraum (9) führt.

7. Dusche nach einem der vorhergehenden Ansprüche, **dadurch gekennzeichnet, dass** unterhalb der Bodenfläche (6) ein Wassermelder (29) angeordnet ist.

8. Dusche nach einem der vorhergehenden Ansprüche, **dadurch gekennzeichnet, dass** die Bodenfläche (6) lösbar an einem ihre Schwenkbewegung ermöglichenden Schwenkbeschlag befestigt ist.

9. Dusche nach einem der vorhergehenden Ansprüche, **dadurch gekennzeichnet, dass** die Bodenfläche (6) eine obere Dekorschicht (18) aufweist, und darunter eine Stützschicht (7), vorzugsweise, dass unter der Stützschicht (7) Verstärkungsprofile (10) angeordnet sind.

10. Dusche nach einem der vorhergehenden Ansprüche, **dadurch gekennzeichnet, dass** der Bodenfläche (6) zur Kraftunterstützung eine Feder als Kraftspeicher zugeordnet ist und/oder ein Dämpfungselement zugeordnet ist, welches in der Art ausgestaltet und angeordnet ist, dass die Bewegung der Bodenfläche (6) aus ihrer Wartungsstellung in ihrer Gebrauchsstellung gedämpft erfolgt, vorzugsweise, dass der Bodenfläche (6) zur Kraftunterstützung eine Gasdruckfeder (11) zugeordnet ist.

11. Dusche nach einem der vorhergehenden Ansprüche, **dadurch gekennzeichnet, dass** unterhalb der Bodenfläche (6) ein Wärmetauscher angeordnet ist, wobei beim Duschen verbrauchtes Warmwasser zunächst durch den Wärmetauscher und erst anschließend zu einer Abflussleitung geführt ist und zum Duschen vorgesehenes Kaltwasser zur Vorwärmung durch den Wärmetauscher geführt ist.

12. Dusche nach einem der vorhergehenden Ansprüche, **dadurch gekennzeichnet, dass** unterhalb der Bodenfläche (6) eine Anlage zum Duschwasser-Recycling angeordnet ist.

13. Dusche nach einem der vorhergehenden Ansprüche, **dadurch gekennzeichnet, dass** unterhalb der Bodenfläche (6) eine digitale Ventilsteuerung angeordnet ist.

14. Dusche nach einem der vorhergehenden Ansprüche, **gekennzeichnet durch** eine Duschwand (20), die seitlich von der Bodenfläche (6) angeordnet ist, aufrecht ausgerichtet ist und eine Duscharmatur aufweist, wobei die Duscharmatur an der Duschwand (20) montiert ist und eine Armaturenleitung von der Duscharmatur bis unter die Bodenfläche (6) verläuft und unterhalb der Bodenfläche (6) mittels einer Schnellkupplung an eine Wasserleitung angeschlossen ist, vorzugsweise, dass die Duscharmatur zusammen mit der Duschwand (20) ein gemeinsam handhabbares Modul bildet und/oder ein wasserführendes Gehäuse aus Kunststoff aufweist und/oder einen Betätigungsgriff aus Metall aufweist.

## Claims

1. Shower having a base surface (6), having a rim (19) which surrounds the base surface (6), and having a drain opening (3) which is intended to discharge water flowing off from the base surface (6), wherein the base surface (6) is mounted for movement between a horizontal use position and a maintenance position,
wherein an installation space (9) is arranged below the base surface (6) and is intended to accommodate technical devices, wherein the base surface (6) is held above the installation space (9) in such a way as to allow, in its maintenance position, access to the installation space (9) and to the technical devices situated therein, **characterized**
**in that** the base surface (6) is supported via load cells in such a way that a weight load on the base surface (6) is detectable, and in that the load cells are assigned evaluation and control electronics which are configured and intended to wirelessly transmit the weight data acquired on the basis of the weight load of a person present in the shower and to retrieve a stored shower profile assigned to the weight data of said person,
and **in that** the shower has multiple exit nozzles for the shower water, and in that the exit nozzles can selectively be opened or closed by way of electrically actuatable valves, and in that the evaluation and control electronics assigned to the load cells are configured and intended to open different exit nozzles according to the shower profile.

2. Shower according to Claim 1, **characterized in that** the base surface (6) is movable in a force-assisted manner.

3. Shower according to Claim 1 or 2, **characterized in that** the base surface (6) is mounted pivotably.

4. Shower according to one of the preceding claims, **characterized in that** a seal (5) in the form of a closed peripheral ring is arranged below the base surface (6), wherein the bottom side of the base surface (6) abuts against the seal (5) in a sealed manner, preferably **in that** a swelling cord is arranged radially within the seal (5), which extends in a ring-shaped manner, and abuts against the bottom side of the base surface (6).

5. Shower according to one of the preceding claims, **characterized in that** the bottom side of the base surface (6) forms a drip edge (8) which extends outside the installation space (9).

6. Shower according to one of the preceding claims, **characterized by** a frame (1) which is intended to be set up or placed on the floor of the room and which has an outflow channel (2), wherein the drain opening (3) adjoins the outflow channel (2), and which bears a fitting, in particular in the form of a pivot fitting, to which the base surface (6) is fastened, wherein, in its horizontal use position, the base surface (6) is supported on the frame, preferably in that the drain opening (3) leads laterally and radially inwards into the installation space (9) enclosed by the frame (1).

7. Shower according to one of the preceding claims, **characterized in that** a water detector (29) is arranged below the base surface (6).

8. Shower according to one of the preceding claims, **characterized in that** the base surface (6) is fastened releasably to a pivot fitting that makes its pivoting movement possible.

9. Shower according to one of the preceding claims, **characterized in that** the base surface (6) has an upper decorative layer (18) and, below that, a supporting layer (7), preferably **in that** reinforcement profiles (10) are arranged below the supporting layer (7).

10. Shower according to one of the preceding claims, **characterized in that** the base surface (6), for force assistance, is assigned a spring as an energy store, and/or is assigned a damping element which is configured and arranged in such a way that the movement of the base surface (6) from its maintenance position into its use position is damped, preferably **in that**, for force assistance, the base surface (6) is assigned a gas pressure spring (11).

11. Shower according to one of the preceding claims, **characterized in that** a heat exchanger is arranged below the base surface (6), wherein hot water used during showering is conducted firstly through the heat exchanger and only afterwards to a drain line, and cold water provided for showering is conducted through the heat exchanger for pre-heating.

12. Shower according to one of the preceding claims, **characterized in that** a system for recycling shower water is arranged below the base surface (6).

13. Shower according to one of the preceding claims, **characterized in that** a digital valve controller is arranged below the base surface (6).

14. Shower according to one of the preceding claims, **characterized by** a shower wall (20) which is arranged laterally in relation to the base surface (6), is oriented vertically and has a shower fitting, wherein the shower fitting is mounted on the shower wall (20) and a fitting line extends from the shower fitting to below the base surface (6) and, below the base surface (6), is connected by means of a quick-action coupling to a water line, preferably in that the shower fitting forms together with the shower wall (20) a jointly handleable module and/or has a plastic water-conducting housing and/or has a metal actuating handle.

## Revendications

1. Douche, avec une surface de base (6), un bord (19) entourant la surface de base (6), et avec une bonde (3) qui est destinée à évacuer l'eau s'écoulant depuis la surface de base (6), la surface de base (6) étant montée de manière mobile entre une position d'utilisation couchée et une position de maintenance,
un espace de montage (9) étant disposé en dessous de la surface de base (6), lequel se destine à recevoir des équipements techniques, la surface de base (6) étant maintenue au-dessus de l'espace de montage (9) de telle sorte qu'elle permet, dans sa position de maintenance, l'accès à l'espace de montage (9) et aux équipements techniques s'y trouvant,
**caractérisée en ce**
**que** la surface de base (6) est supportée par des cellules de pesée de telle manière qu'une charge de poids sur la surface de base (6) peut être détectée, et qu'est associée aux cellules de pesée une électronique d'évaluation et de commande, qui est configurée pour et se destine à transmettre sans fil les données de poids détectées sur la base de la charge de poids d'une personne se tenant dans la douche et récupérer un profil de douche associé aux données de poids de ladite personne et enregistré,
et **que** la douche comporte plusieurs buses de sortie pour l'eau de douche, et que les buses de sortie peuvent être ouvertes ou fermées au choix avec des soupapes pouvant être actionnées électriquement, et que l'électronique d'évaluation et de commande associée aux cellules de pesée est configurée pour et destinée à ouvrir différentes buses de sortie en fonction du profil de douche.

2. Douche selon la revendication 1, **caractérisée en ce que** la surface de base (6) est mobile avec une assistance en force.

3. Douche selon la revendication 1 ou 2, **caractérisée en ce que** la surface de base (6) est montée de manière à pouvoir pivoter.

4. Douche selon l'une des revendications précédentes, **caractérisée en ce qu'**un joint d'étanchéité (5) est disposé sous la surface de base (6) sous la forme d'un anneau périphérique fermé, la face inférieure de la surface de base (6) reposant de manière étanche sur le joint d'étanchéité (5), de préférence qu'un cordon de gonflement est disposé radialement à l'intérieur du joint d'étanchéité (5) s'étendant de manière annulaire, lequel repose sur la face inférieure de la surface de base (6).

5. Douche selon l'une des revendications précédentes, **caractérisée en ce que** la face inférieure de la surface de base (6) forme une arête d'égouttement (8) qui s'étend à l'extérieur de l'espace de montage (9).

6. Douche selon l'une des revendications précédentes, **caractérisée par** un cadre (1) qui se destine à être placé ou posé sur le sol de la pièce et qui comporte un canal d'évacuation (2), la bonde (3) se raccordant au canal d'évacuation (2), et qui porte une ferrure, configurée en particulier sous forme de ferrure pivotante, sur laquelle est fixée la surface de base (6), la surface de base (6) s'appuyant sur le cadre dans sa position d'utilisation couchée, de préférence que la bonde (3) mène latéralement et radialement vers l'intérieur dans l'espace de montage (9) délimité par le cadre (1).

7. Douche selon l'une des revendications précédentes, **caractérisée en ce qu'**un détecteur d'eau (29) est disposé au-dessous de la surface de base (6).

8. Douche selon l'une des revendications précédentes, **caractérisée en ce que** la surface de base (6) est fixée de manière amovible sur une ferrure pivotante permettant son mouvement de pivotement.

9. Douche selon l'une des revendications précédentes, **caractérisée en ce que** la surface de base (6) comporte une couche décorative supérieure (18) et, en dessous, une couche d'appui (7), de préférence que des profilés de renforcement (10) sont disposés sous la couche d'appui (7).

10. Douche selon l'une des revendications précédentes, **caractérisée en ce qu'**un ressort est associé à la surface de base (6) en tant qu'accumulateur de force pour l'assistance en force et/ou un élément d'amortissement est associé à celle-ci, lequel est configuré et disposé de telle sorte que le déplacement de la surface de base (6) depuis sa position de maintenance dans sa position d'utilisation est effectué de manière amortie, de préférence qu'un ressort à gaz comprimé (11) est associé à la surface de base (6) pour l'assistance en force.

11. Douche selon l'une des revendications précédentes, **caractérisée en ce qu'**un échangeur de chaleur est disposé en dessous de la surface de base (6), de l'eau chaude consommée lors de la douche étant d'abord conduite à travers l'échangeur de chaleur et seulement ensuite à une conduite de vidange et de l'eau froide prévue pour la douche étant conduite à travers l'échangeur de chaleur pour le préchauffage.

12. Douche selon l'une des revendications précédentes, **caractérisée en ce qu'**une installation de recyclage d'eau de douche est disposée au-dessous de la surface de base (6).

13. Douche selon l'une des revendications précédentes, **caractérisée en ce qu'**une commande de soupape numérique est disposée au-dessous de la surface de base (6).

14. Douche selon l'une des revendications précédentes, **caractérisée par** une paroi de douche (20), qui est disposée latéralement par rapport à la surface de base (6), est orientée verticalement et comporte une robinetterie de douche, la robinetterie de douche étant montée sur la paroi de douche (20) et une conduite de robinetterie s'étendant depuis la robinetterie de douche jusque sous la surface de base (6) et étant raccordée à une conduite d'eau au-dessous de la surface de base (6) au moyen d'un raccord rapide, de préférence que la robinetterie de douche forme avec la paroi de douche (20) un module pouvant être manipulé conjointement et/ou comporte un boîtier de guidage d'eau en matière plastique et/ou comporte une poignée d'actionnement en métal.
